# EUROPEAN PATENT SPECIFICATION

(11) **EP 4 554 401 B1**
(45) Date of publication and mention of the grant of the patent: **11.03.2026**
(21) Application number: 23741150.9
(22) Date of filing: 07.07.2023
(51) Int. Cl.: H05B 6/46, H05B 6/62, A23B 2/08, A23B 70/30, H05B 6/60

(54) **RF INLINE HEATING**
HF-INLINE-HEIZUNG
CHAUFFAGE EN LIGNE PAR RF

(30) Priority: 11.07.2022 NL 2032440
(43) Date of publication of application: 21.05.2025
(73) Proprietor: Food Technology Holding B.V., 6665 CA Driel (NL)
(72) Inventor: VAN DEN BOSCH, Henricus Franciscus Maria, 6665 CA Driel (NL); DE HEIJ, Wouter Bernardus Cornelius, 6665 CA Driel (NL); BOONMAN, Maurice, 6665 CA Driel (NL)
(74) Representative: EDP Patent Attorneys B.V.
(86) International application number: PCT/NL2023/050365
(87) International publication number: WO 2024/014951

(56) References cited:
- WO-A1-2020/162748
- FR-A1- 2 863 829
- GB-A- 2 274 568
- US-A1- 2013 168 386

## Description

### FIELD OF THE INVENTION

The invention relates to an apparatus for heat treating a flowable food product. The invention further relates to a method for heat treating a flowable food product.

### BACKGROUND OF THE INVENTION

The use of high-frequency electromagnetic alternating field in heating products is known in the art. US2013/168386, for instance, describes a method and device for uniformly heating products, the products being heated by a high-frequency electromagnetic alternating field. The method and the device are characterized in that the high-frequency electromagnetic alternating field for heating the products is produced by means of a semiconductor generator. By using a semiconductor generator, temperature fluctuations in the event of fluctuating load due to the transport of the products through the heating volume are reduced, so that a more uniform temperature of the products can be achieved in the heating process.

Further, FR2863829 A1 describes a process consisting of creating a flow of a fluid foodstuff inside a duct, subjecting it to volume heating by means of electrodes separated by insulators in the duct walls, and controlling the surface temperature so as to produce an even temperature distribution throughout the product and to limit blocking of the duct. The surface temperature is controlled by cooling the duct, using a circulating low conductivity coolant fluid, and both heating and cooling are carried out in the same section. The coolant fluid can be circulated in the same or opposite direction to the flow of the product inside the duct, with the coolant also traversing the electrodes. The temperature of the duct is monitored and controlled by a regulating loop.

### SUMMARY OF THE INVENTION

Heat treating food products is a vital step in the manufacture and production of any food product. Pasteurization or sterilization of food products are mandatory steps in the production and distribution of food products. In a continuously operated facility, food products may be flown in a continuous stream through channel(s) wherein they may be heat treated through at least a part of the channel(s). Prior art systems may have the disadvantage that they do not efficiently heat a flowable food product. Especially, they may not couple the energy efficiently into the food product to be treated. This might be (particularly) the case when heat treating a flowable food product that has a heterogenous composition (such as a liquid food product consisting of multiple solid food materials). Moreover, prior art solutions do not seem to be able to homogenously heat a food product comprising liquid food material in combination with solid food particles. Solid food particles may be polydisperse in density, composition, size, shape, etc. Hence, making it challenging to heat treat the food product using conventional systems. The energy in these systems may be coupled in heterogeneously resulting in (local) overheating and hot spots, or in (local) under heating and cold spots in the products. Further, prior art solutions (also) do not seem to be able to sterilize or pasteurize food products without losing a substantial share of the product quality. Continuous heating (such as using a single heating element or unit) of the flowable food product may overheat some regions of the flowable food product (such as close to the heat source) resulting in an unevenly heated food product. Further, there may be a limitation to the maximum treatment temperatures that may be achieved using prior art systems.

The term "sterilization" may especially refer to the destruction of (substantially) all microorganisms in the flowable food product. The term "pasteurization" may especially refer to the process of killing pathogenic bacteria in the flowable food product by heating the flowable food product to a certain temperature (such as 100°C) for a certain duration of time.

Food products may be heated as they are flowed through a channel. Due to friction between the flowable food product and the walls of the channel, the velocity of the flowable food product is the lowest near the inner wall and highest at the center of the channel (through which the food product is flown). This difference in velocity may result in a variation in the temperature of the flowable food product in the radial direction (of the channel). Hence, this may result in the overheating of the flowable food product near the walls of the channel. Overheating of the flowable food product at the walls of the channel may damage the inner wall of the channel. Further, it may (also) lead to sticking of burnt food product on the inner wall of the channel. This may damage or (even) render the apparatus inoperable.

Further, prior art systems may have to heat the flowable food product gradually to avoid overheating the flowable food product at the inner walls of the system. However, this is undesirable since this requires a significantly long heating section through which the flowable food product is flown. Moreover, this may not be feasible in an industrial context such as in situations where sufficient space is not available to accommodate a very long channel through which the flowable food product may be flown. This may have additional drawbacks such as a bulkier construction, difficulty in configuring the heat transmission over a long section, and the inability to configure the channel (through which the flowable food product is flown) into configurations other than (for example) a rectilinear configuration. Furthermore, such a system may also require to be heated for a significant amount of time, which subsequently reduces the delivery rate (or output) from the system.

In prior art systems where the flowable food product is heated by means of RF heating may (yet) result in high temperatures at the inner wall of the system channel through which the flowable food product is flown. The temperature of the flowable food product at the inner wall (of the system channel) may reach a value several times higher than the average temperature of the flowable food product. Further, the temperature dependence of the electric conductivity of the flowable food product may enlarge this flow related temperature increase ratio to an even higher ratio.

Hence, it is an aspect of the invention to provide an alternative apparatus (or "RF inline heating apparatus") for heat treating a flowable food product, which preferably further at least partly obviates one or more of above-described drawbacks. The present invention may have as object to overcome or ameliorate at least one of the disadvantages of the prior art, or to provide a useful alternative.

Hence, in a first aspect, the invention may be an apparatus for heat treating a flowable food product (or "food product"). In embodiments, the apparatus may comprise a channel system. In embodiments, the apparatus may comprise a radiofrequency treatment system. In embodiments, the apparatus may comprise a temperature holding system. In embodiments, the apparatus may comprise the channel system, the radiofrequency treatment system, and the temperature holding system. In embodiments, the channel system may comprise a system channel. In further embodiments, the system channel may comprise RF heating channel parts. In embodiments, the system channel may comprise one or more cooling channel parts. In embodiments, the system channel may comprise a temperature holding channel part. In embodiments, the system channel may comprise RF heating channel parts, one or more cooling channel parts, and the temperature holding channel part. In embodiments, the radiofrequency treatment system may comprise an arrangement wherein at least a first RF heating channel part may be configured upstream of a first cooling channel part, and the first cooling channel part may be configured upstream of a second RF heating channel part. In embodiments, the radiofrequency treatment system may be configured to provide radiofrequency waves to the flowable food product in the RF heating channel parts. In embodiments, the radiofrequency treatment system may be configured to cool the flowable food product in the one or more cooling channel parts. In further embodiments, the radiofrequency treatment system may be configured to provide radiofrequency waves to the flowable food product in the RF heating channel parts and cool the flowable food product in the one or more cooling channel parts, especially according to a temperature distribution wherein (i) a temperature of the flowable food product in a cooling channel part downstream of a RF heating channel part is lower than the temperature of the flowable food product in the RF heating channel part configured upstream of that cooling channel part, and even more especially (ii) a temperature of the flowable food product in a RF heating channel part configured downstream of a set of a RF heating channel part and a cooling channel part is higher than that of the flowable food product in the RF heating channel part of that set. In embodiments, the temperature holding system may be configured downstream of the radiofrequency treatment system. In further embodiments, the temperature holding system may be configured to maintain the flowable food product in the temperature holding channel part at a holding temperature Tₕ₆. Hence, in embodiments the invention provides an apparatus for heat treating a flowable food product, wherein the apparatus comprises a channel system, a radiofrequency treatment system, and a temperature holding system, wherein the channel system comprises a system channel; wherein the system channel comprises RF heating channel parts, one or more cooling channel parts, and a temperature holding channel part; wherein the radiofrequency treatment system comprises an arrangement wherein at least a first RF heating channel part is configured upstream of a first cooling channel part, and wherein the first cooling channel part is configured upstream of a second RF heating channel part; wherein the radiofrequency treatment system is configured to (a) provide radiofrequency waves to the flowable food product in the RF heating channel parts and (b) cool the flowable food product in the one or more cooling channel parts, according to a temperature distribution wherein a temperature of the flowable food product in a cooling channel part downstream of a RF heating channel part is lower than the temperature of the flowable food product in the RF heating channel part configured upstream of that cooling channel part, and wherein a temperature of the flowable food product in a RF heating channel part configured downstream of a set of a RF heating channel part and a cooling channel part is higher than of the flowable food product in the RF heating channel part of that set; wherein the temperature holding system is configured downstream of the radiofrequency treatment system and is configured to maintain the flowable food product in the temperature holding channel part at a holding temperature Tₕ₆.

The (RF inline heating) apparatus, in embodiments, may heat the flowable food product over multiple stages (or multiple sections) such as in the (many) RF heating channel parts. The efficient control of the temperature of the flowable food product (in different sections) may have a significant impact on the quality of the food product. High temperatures at any (single) part (or region) of the flowable food product within the system channel may lead to deterioration of the quality of the flowable food product. Hence, the apparatus, may be able to heat the flowable food product by first heating the flowable food product in a RF heating channel part, then cooling the flowable food product in a cooling channel part. This may provide the advantage of (i) heating the flowable food product homogenously, and (ii) preventing any local hot (or cold) spots, such as near the inner walls of the system channel.

RF heating may provide the advantage of heating the flowable food product homogenously, even when there are local variations (such as the presence of solid food particles) within the flowable food product. Further, RF heating may provide energy relatively homogeneously to the flowable food product, without the creation of hot spots inside the flowable food product as well as inside the apparatus and without substantial loss of energy to the surroundings.

Further, by using multiple RF heating (and cooling) channel parts, the apparatus may determine the temperature to which the flowable food product is heated (or cooled), the duration for which the flowable food product is heated (or cooled), and the location at which the flowable food product is heated (or cooled). Additionally, the apparatus may provide control over the velocity of the flowable food product in a particular section of the system channel. Hence, these features provide very meticulous control over the heating of the flowable food product over the entire length of the system channel. Cooling of the flowable food product (between RF heating channel parts) may prevent overheating of the flowable food product close to the inner wall of the system channel, thus preserving the quality of the flowable food product. Cooling in a cooling channel part, may help bring the temperature of the flowable food product close to the walls to the bulk temperature of the flowable food product. Hence, the invention may provide a homogeneously heated food product.

The combination of heating the flowable food product in the RF heating channel part followed by cooling the flowable food product by means of the cooling channel part downstream of the RF heating channel part may provide the advantage of heating the flowable food product uniformly. This may (additionally) avoid uncontrolled production of water vapor in the system channel. This may further provide the advantage of raising the treatment temperatures that may be achieved using RF heating i.e. while one RF heating channel may be limited by a maximum heating temperature, the subsequent heating and cooling of the flowable food product may allow uniform heating of the flowable food product. Thus, allowing the subsequent RF heating channel part(s) to heat the flowable food product to a higher temperature and consequently a higher treatment temperature. A lower temperature of the flowable food product at the inner wall may further overcome the drawback of food fouling due to high temperatures at the inner wall of the flowable food product. This may further provide the advantage of keeping the walls of the system channel clean.

Further, the RF heating channel parts may provide a heat in a very short duration of time. This may provide the advantage of a high throughput or delivery rate of flowable food product. Moreover, the space occupied by the RF heating channel part may be a small fraction of the total length of the system channel. This may provide the advantage of changing or configuring the shape of the system channel into a geometry that may be more suitable to the location at which the apparatus is situated. For example, a long channel can be accommodated in a single room by looping parts of the channel. Another advantage of the RF heating channel parts is that the flowable food product can be heated to much higher temperatures while using a relatively short system channel (compared to other systems that may use conventional heating).

The velocity of the flowable food product may vary radially from the center of the system channel to the walls of the system channel. The term "velocity" or "flow velocity" may especially refer to the bulk velocity of the flowable food product. It will be clear to the skilled person that the "bulk velocity" is the average velocity of the flowable food product over the entire cross-section of the system channel. The term "velocity profile" here refers to distribution of the velocity of the flowable food product along a particular direction (such as along the vertical direction or along the radial direction) spanning the extent (or cross-section) of the system channel (such as from the top of the system channel to the bottom, or from the center of the system channel to the inner wall of the system channel). For example, in embodiments, under laminar flow conditions, the velocity profile of the flowable food product may be parabolic. Note that the velocity profiles in the system channel may be substantially symmetric about the center of the system channel. The flow velocity may, in embodiments, be sufficiently high such that the gravitational effects on the velocity of the flowable food products are minimal or negligible, hence, resulting in an essentially symmetric velocity profile.

Laminar flow is a type of flow pattern of a fluid in which fluid at any location flows along essentially parallel lines, as opposed to turbulent flow, where the particles flow in (seemingly) random and chaotic directions. Such flow profile may be referred to as a laminar profile. The terms "laminar" or "laminar profile" or "laminar flow" or "(flowing) laminarly" may refer to the flow profile as described herein. Laminar flow may also be described as the type of fluid motion where the velocity, pressure and other fluid properties in a particular point remain constant. Note that the presence of food particles may alter the flow profile different to a parabolic profile, however, the flow may still remain essentially laminar.

The term "temperature" may especially refer to the bulk temperature of the flowable food product measured over the cross-section of the flowable food product (analogous to the flow velocity), unless indicated otherwise. The "bulk" temperature of a fluid may be defined as the temperature of the fluid averaged over the cross-section of the channel. The temperature profile of the flowable food product may vary in the radial direction. The term "temperature profile" refers to the distribution of the temperature along a spatial direction spanning the extent (or cross-section) of the system channel (it may be defined analogous to the velocity profile). Analogous to the velocity profile, the temperature profile may, in embodiments, (also) be essentially symmetric about the center of the system channel.

In embodiments, the invention may be an apparatus for heat treating a flowable food product. The flowable food product may comprise a product selected from the group consisting of a wet baby food, a dip, a sauce, a salsa (or salsa sauce), a dairy product, and a soup. The flowable food product may comprise a meal product, a meal component, a potato, a potato product, a vegetable, a vegetable product, meat, a meat product, etc. As will be clear to a person skilled in the art, the food product may also comprise a combination of products, such as a food product comprising potatoes, vegetable(s), and meat. The term food product may relate to any product that is intended for human (or animal) consumption. The term may thus also refer to a feed product. Further, the food product may comprise a combination of liquid food product and solid food particles. Solid food particles may comprise a variety of dimensions and shapes, such as a cube, or a cylinder, or a sphere. The weight percentages of solids in the food product may vary between 0-50%. The solid food particles may also exhibit a variation in sizes. Especially, the flowable food product may (thus) be pumpable. Especially, the flowable food product is flowable at room temperature.

In embodiments, the channel system may comprise a system channel. The system channel, in embodiments, may essentially be a duct or a tube through which the flowable food product is flown. In embodiments, the system channel may be a closed unit (with an inlet and an exit), wherein the food product is isolated from the external environment. In embodiments, the system channel may comprise an inner wall (in contact with the flowable food product) and an outer wall. In embodiments, the system channel may be configured to host other elements along the outer wall.

In embodiments, the system channel may be configured along a straight line, i.e. the axis of the system channel may be rectilinear. In embodiments, the system channel may (also) assume a curved shape, or may comprise bends, or wriggles. This may provide the advantage of conforming the system channel to a spatially efficient configuration, such as in a location (such as a factory or industrial complex) where space is a limitation. Further this may allow a longer length of the system channel to be accommodated. In embodiments, the system channel may also vary in elevation along its length. Essentially the entire path over which the flowable food product is fed through the system is herein indicated as "system channel". Hence, system channel may, in embodiments, comprise a plurality of fluidly coupled channels and may optionally also include intermediate vessels. In embodiments, the system channel may also provide insulation. Hence, preventing loss of heat from the flowable food product to the external environment.

In embodiments, the system channel may have a length in the range at least 5 m, such as especially at least 10 m. In specific embodiments, the system channel may have a length in the range at least 20 m, such as at least 30 m. In yet further embodiments, the system channel may have a length in the range at maximum 500 m, such as at maximum about 300 m, such as e.g. selected from the range of 30-200 m, such as 60-120 m. However, other values may also be possible. Hence, the total length of the system channel may be dozens or even hundreds of meters. Amongst other, a contribution of the holding channel part may be substantial (see also below).

In embodiments, the system channel may comprise RF heating channel parts. In embodiments, the system channel may comprise one or more cooling channel parts. Further, in embodiments, the system channel may comprise a holding temperature channel part. Such parts refer to parts of the system channel wherein a specific function is executed, and wherein apparatuses or devices, external from the system channel, may execute an action on part of the system channel, like one or more parts wherein heating is executed (by the RF heating channel parts), or one or more parts wherein cooling is executed (by the cooling channel parts), or one or more parts wherein heating is executed with e.g. a (non-RF) heating means (such as by the temperature holding channel part), etc.

The term "RF" especially refers to "radiofrequency" which is an alternating electric current or voltage or of a magnetic, electric, or electromagnetic field or mechanical system. The oscillation rate of RF may vary in the frequency range from around 20 kHz to around 300 GHz, though other values are herein not excluded. In embodiments, the system channel may have multiple RF heating channel parts along the axis of the system channel. In embodiments the RF heating channel parts may be situated along the system channel to strategically heat the flowable food product. In embodiments, the radiofrequency treatment system may comprise the first RF heating channel part. In further embodiments, the radiofrequency treatment system may comprise the second RF heating channel part. In embodiments, the radiofrequency treatment system may comprise a first cooling channel part. In embodiments, the first RF heating channel part may be configured upstream of the first cooling channel part. In further embodiments, the first cooling channel part may be configured upstream of the second RF heating channel. In yet further embodiments, the first cooling channel part may be configured upstream of the second RF heating channel part, and the first RF heating channel part may be configured upstream of the first cooling channel part.

In embodiments, the radiofrequency treatment system may be configured to cool the flowable food product at (and in the vicinity of) the cooling channel part. The flowable food product may be cooled as it is flown through the system channel past the region where the cooling channel part is configured. In further embodiments, multiple cooling channel parts may be configured along the system channel. In embodiments, the temperature of the flowable food product may be controlled by means of the radiofrequency treatment system, via the RF heating channel parts and the cooling channel parts.

In further embodiments, an alternating arrangement of RF heating channel parts and cooling channel parts may be configured along the system channel. Here "alternating arrangement" refers to an arrangement where an RF heating channel part is followed by a cooling channel part, and the cooling channel part is followed by an RF heating channel part and so on. Hence, in specific embodiments, the system channel may comprise in order (along the downstream direction) a first RF heating channel part, a first cooling channel part, a second RF heating channel part and a second cooling channel part. In alternative embodiments, the system channel may comprise (more) channels which may branch away from the system channel. In further embodiments, the system channel may comprise intermediate channels that may connect different sections of the system channel. The network of channels may allow alternative flow paths through which the flowable food product may be flown. This provides the versatility of selecting the path through which the flowable food product is flown. For example, additional heating may be required for specific types of flowable food products, in which case, it may be advantageous to flow the flowable food product through additional heating sections via intermediate channels (without the requirement of reconfiguring the entire system channel). This may be particularly advantageous for controlling the temperature of the flowable food product by flowing it through more (or fewer) RF heating (or cooling) channel parts, in dependence of the type of flowable food product.

In embodiments, the radiofrequency treatment system may be configured to provide radiofrequency waves to the flowable food product in the RF heating channel parts. In embodiments, the radiofrequency treatment system may be configured to cool the flowable food product in the one or more cooling channel parts.

In embodiments, the radiofrequency treatment system may heat the flowable food product via the RF heating channel parts. In further embodiments, the radiofrequency treatment system may configure (additionally) the location at which the flowable food product is heated (by altering the location of the RF heating channel parts). In embodiments, the radiofrequency system may cool the flowable food product via the cooling channel parts. Especially, this may provide the advantage of reducing the temperature of the flowable food product at the inner wall of the system channel, such as closer to the bulk temperature of the flowable food product. Moreover, in embodiments, the radiofrequency system may also control the location at which the flowable food product is cooled. Hence, in embodiments, the radiofrequency treatment system may control the application of heating (or cooling), such as the extent of heating (or cooling) provided, the location at which heating (or cooling) is provided and the duration for which heating (or cooling) is provided. The heating (or cooling) of the flowable food product may be referred to as "temperature control" or "temperature controlling". Controlling the temperature of the flowable food product as it is flown through the system channel may provide the advantage of preserving the quality of the food product. Hence, in embodiments, the radiofrequency treatment system may be configured to provide radiofrequency waves to the flowable food product in the RF heating channel parts. Further, in embodiments, the radiofrequency treatment system may be configured to cool the flowable food product in the one or more cooling channel parts (of the radiofrequency treatment system).

In embodiments, the flowable food product may be cooled such that the temperature of the flowable food product in a cooling channel part downstream of a RF heating channel part is lower than the temperature of the flowable food product in the RF heating channel part configured upstream of that cooling channel part. In further embodiments, the temperature of the flowable food product in a RF heating channel part configured downstream of a set of a RF heating channel part and a cooling channel part may be higher than of the flowable food product in the RF heating channel part of that set. In embodiments, wherein the cooling channel part is configured downstream of the RF heating channel part, the flowable food product may be cooled at the cooling channel part to a temperature lower than at the RF heating channel part (upstream of the cooling channel part).

In embodiments, the RF heating channel part and the (neighboring) cooling channel part (downstream of the RF heating channel part) may form a set. In further embodiments, the RF heating channel part configured downstream of a set may heat the flowable food product to a temperature higher than the temperature of the flowable food product in the RF heating channel part of that set. Hence, in embodiments, the flowable food product at each successive RF heating channel part configured along the system channel (in the downstream direction) may be heated to a temperature higher than the previous RF heating channel part (configured upstream). Further, in embodiments, the flowable food product at each cooling channel part configured downstream of the RF heating channel part (along the system channel) may be cooled to a temperature lower than in the RF heating channel part (configured upstream). In embodiments with a plurality of sets, the flowable food product may be heated to a higher temperature at the RF heating channel part of each subsequent set. Due to the velocity profile of the flowable food product, the heat provided to the flowable food product may not always be provided homogenously to the bulk of the flowable food product. Meaning that the flowable food product may be heated to high temperatures at the inner wall of the system channel, which may (in certain instances) lead to burning or fouling of the flowable food product at the inner wall of the system channel. The configuration of a cooling channel part downstream of a RF heating channel part may provide the advantage of cooling the flowable food product, especially at the inner wall of the system channel. Hence, providing the advantage of heating the flowable food product to a higher temperature at each subsequent set, while simultaneously preventing burning or fouling of the flowable food product at the inner wall of the system channel.

In embodiments, the temperature holding system may be configured downstream of the radiofrequency treatment system. In further embodiments, the temperature holding system may be configured to maintain the flowable food product in the temperature holding channel part at a holding temperature Tₕ₆.

In embodiments, the temperature holding system may be configured to maintain the flowable food product at a constant temperature. In further embodiments, the flowable food product may be maintained at a temperature higher than the temperature of the flowable food product in the last RF heating channel part (in the radiofrequency treatment system) upstream of the heat treatment channel part. A thermal treatment of the flowable food product may require the flowable food product to be heated to a temperature higher than 100°C for significant duration of time such as 0.5-10 minutes, such as especially 3-8 minutes. Hence, in embodiments, the temperature holding channel part may be configured most downstream i.e. further downstream than all other RF heating channel parts in the embodiment. This provides the advantage of (i) heating the flowable food product uniformly by the set(s) of the RF heating channel part and the cooling channel parts, and (ii) raising the temperature of the flowable food product to a suitable temperature (such as for pasteurization) before flowing the flowable food product through the temperature holding channel part. Further, the temperature holding system may also provide the benefit of maintaining the flowable food product in motion, thus, preventing the settling of the solid food particles in the flowable food product in the system channel.

Hence, in embodiments, the flowable food product may be heated in the last RF heating channel part configured upstream of the temperature holding channel part to a temperature close to the treatment temperature, such as a temperature not higher than or not lower than 20°C of the holding temperature Tₕ₆, such as a temperature not higher than or not lower than 10°C of the holding temperature Tₕ₆. In embodiments, the flowable food product may be sterilized (or pasteurized) by maintaining the flowable food product within the temperature holding channel part at a temperature higher than 100°C for a period of 0.5-10 minutes, such as 3-8 minutes. In embodiments, the radiofrequency treatment system and the temperature holding system may uniformly heat the bulk of the flowable food product without overheating any part of the flowable food product.

In a further aspect, the invention may provide a method ("method") for heat treating a flowable food product using the apparatus. The method may comprise providing radiofrequency waves to the flowable food product in the RF heating channel parts. The method may further comprise cooling the flowable food product in the one or more cooling channel parts, according to a temperature distribution wherein a temperature of the flowable food product in a cooling channel part downstream of a RF heating channel part is lower than the temperature of the flowable food product in the RF heating channel part configured upstream of that cooling channel part, and wherein a temperature of the flowable food product in a RF heating channel part configured downstream of a set of a RF heating channel part and a cooling channel part is higher than of the flowable food product in the RF heating channel part of that set. The method may further comprise maintaining the flowable food product in the holding temperature channel part at a holding temperature Tₕ₆.

Hence, in embodiments, the invention may provide a method for heat treating the flowable food product using an apparatus (especially the apparatus described herein), which may comprising providing radiofrequency waves to the flowable food product in the RF heating channel parts; comprising cooling the flowable food product in the one or more cooling channel parts, according to a temperature distribution wherein a temperature of the flowable food product in a cooling channel part downstream of a RF heating channel part is lower than the temperature of the flowable food product in the RF heating channel part configured upstream of that cooling channel part, and wherein a temperature of the flowable food product in a RF heating channel part configured downstream of a set of a RF heating channel part and a cooling channel part is higher than of the flowable food product in the RF heating channel part of that set; and comprising maintaining the flowable food product in the temperature holding channel part at a holding temperature Tₕ₆.

In embodiments, the apparatus may further comprise a pump system. In further embodiments, the pump system may be configured to flow the flowable food product with an average flow velocity of at least 0.25 m/s, especially at least 0.3 m/s, like at least 0.35 m/s, such as at least 0.5 m/s through the system channel. Hence, in embodiments, the method may comprise flowing the flowable food product with a flow velocity of at least 0.25 m/s, 0.3 m/s, like at least especially at least 0.5 m/s through the system channel. The flowable food product may comprise solid food particles that may be suspended in the flowable food product. Thus, in embodiments, a minimum flow velocity may be maintained to keep the solid food particles in suspension i.e. to prevent solid food particles from settling at the bottom of the system channel. Hence, in embodiments, the flowable food product may be flown at a velocity of at least 0.25 m/s, especially at least 0.5 m/s particularly in the parts of the system channel where the flowable food product is heated (and cooled) upstream of the temperature holding channel part. Further, the average flow velocity may be at maximum about 7.5 m/s, such as especially at maximum about 5 m/s.

In embodiments, the apparatus may use the pump system to create a pressure gradient over the length of the system channel, thus pumping the flowable food product through the system in the downstream direction. In further embodiments, the pressure gradient may be selected such that the flowable food product is flown through the system channel at a velocity of 0.25 m/s, such as 0.3 m/s, like at least 0.5 m/s.

It is apparent to the skilled person that the Reynolds number may be directly proportional to the velocity of the flowable food product and the diameter of the system channel, and inversely proportional to the viscosity of the flowable food product. Hence, the specific choice of the velocity of the flowable food product may help ensure that the Reynolds number is equal to or below 2300, such as equal to or below 2000 i.e., the flowable food product is flowing laminarly. However, a very high flow velocity may make the flow turbulent which is undesirable. Hence, in embodiments, the flow velocity may have a maximum value of 5 m/s.

The pump system may be crucial to maintaining a specific flow rate of the flowable food product within the system channel, especially in the part of the system channel upstream of the temperature holding channel part, such as specifically in the RF heating channel part and the cooling channel part. The term "flow rate" may refer to the volume of flowable food product flown through the cross section of the system channel in unit time.

In embodiments, the flowable food product may remain in a state of continuous motion or may be continuously agitated. The flowable food product may flow through the system channel due to the pressure difference imposed (or pressure gradient) over the flowable food product. In embodiments, the method may comprise applying sufficient pressure to maintain a flow velocity of the flowable food product such as at least 0.25 m/s, such as at least 0.5 m/s. Further, in embodiments the method may comprise applying sufficient pressure to keep the flowable product at the treatment temperature in a liquid phase. A pressure in the channel system, especially in the RF heating channel parts may be selected to prevent boiling of (at least part of) the flowable food product (in the channel system, especially in the RF heating channel part(s)).

In embodiments, the pump may apply a pressure selected from the range of at least 8 bar, such as at least 10 bar. More especially, the pump may be applied a pressure of at least 15 bar, such as selected from the range of 20-30 bar, such as selected from the range of up to about 25 bar. A (minimal) pressure in the system channel, especially in the RF heating channel part(s) may in embodiments be selected from the range of at least 2 bar, such as at least 3 bar, even more especially at least 4 bar. In further embodiments, said minimal pressure may be at least 5 bar. A maximum pressure in the system channel, especially in the RF heating channel part(s) may be in the range as described in relation to the pressure applied by the pump. A very high velocity of the flowable food product may not be desired as it may cause the liquid part of the flowable food product to become turbulent. At the same time, a very low flow velocity may cause sedimentation or settling of solid food particles at the bottom of the system channel, which is undesirable.

In embodiments, the pump system may guarantee a constant flowable food product flow rate. In further embodiments, the pump system may avoid damaging the integrity of the solid food particles in the flowable food product. In yet further embodiments, the pump system may comprise a piston pump, more especially a double piston pump. In embodiments, the pump system may guarantee a constant flowable food product flow rate, such as specifically in the RF heating channel part(s) and the cooling channel part(s).

In embodiments, the holding temperature Tₕ₆ may be selected from the range of 90-150°C. In further embodiments, the heat holding temperature Tₕ₆ may be selected from the range of 115-135°C. In embodiments, the method may comprise heating the flowable food product to a holding temperature Tₕ₆ selected from the range of 90-150°C. In further embodiments, the method may comprise heat treating the flowable food product to a holding temperature Tₕ₆ selected from the range of 115-135°C.

Treatment, such as sterilization or pasteurization of food products, may require heating the flowable food product to a temperature higher than 100°C. However, certain food products, such as comprising solid food particles may require a higher temperature than 100°C to be effectively sterilized (or pasteurized). Moreover, the heating of a flowable food product may not be constant over the entire bulk of the flowable food product. The heating of the flowable food product successively in stages through a series of a combination of RF heating channel parts and cooling channel parts (comprised by the radiofrequency treatment system) may provide the advantage of gradually heating the flowable food product. In embodiments, the holding temperature Tₕ₆ may be selected in dependence of the type of flowable food product flown through the system channel. The holding temperatures are chosen such that the heat treatment is sufficiently capable of achieving a treatment temperature, which may be a maximum of 150°C. At the same time, the range of the holding temperature may be varied to ensure that the heat treatment results in minimal product degradation and prevents burning of the flowable food product under all production conditions.

In embodiments, the RF inline heating apparatus may be configured to maintain the flowable food product in the temperature holding channel part at the holding temperature Tₕ₆ during a heating time period selected from the range of 0.5-10 minutes, such as 3-8 minutes. Hence, in embodiments, the method may comprise maintaining the flowable food product in the temperature holding channel part at the holding temperature Tₕ₆ over a heating time period selected from the range of 0.5-10 minutes, such as 3-8 minutes.

The duration over which the flowable food product is heated may be critical to maintaining product quality. Extended exposure to high temperatures may cause product degradation, starch overcooking and discoloration of the flowable food product. Having too long a heating period (such as longer than 10 minutes) may lead to overheating of the flowable food product. This is particularly undesirable as it may lead to fouling or burning of the food product, especially at the inner wall of the system channel. Having too short a heating period (such as less than 0.5 minutes) may insufficiently heat the flowable food product, thus requiring further heating at a location further downstream.

To facilitate the flowing the flowable food product in the holding channel part for the duration of the heating time period, the temperature holding part may be configured in a plurality of ways. In embodiments, the temperature holding system may comprise a spiral aspect. In embodiments, the temperature holding channel part may be coiled or looped (such as in a spiral configuration or aspect) to accommodate a longer length of the temperature holding channel part. This may provide the advantage of heating the flowable food product for a longer duration of time, since the flowable food product may reside in a such a section for a longer period of time.

Especially, the holding channel part is (also) an elongated tube, optionally surrounded by another tube for better temperature control. The void between the inner tube, through which the flowable food may be transported, and the outer tube may be vacuum, or may be temperature controlled via a fluid in the void. The fluid may be used to keep the flowable food product in the inner tube at the desired temperature.

The holding channel part may comprise one or more curves. In this way, space may be saved. A length of the holding channel part may be e.g. at least 5 m, more especially at least 10 m, such as yet even more especially at least 15 m. In embodiments, holding channel part may have a length selected from the range of 30-200 m, like selected from the range of 60-120 m. Hence, the total length of the system channel may be dozens or even hundreds of meters.

In embodiments, the radiofrequency treatment system may be configured to heat the flowable food product in a most downstream configured RF heating channel parts to a final radiofrequency treatment temperature T_{rf*}. In further embodiments, the final radiofrequency treatment temperature T_{rf*} may be selected from the range of 90-150°C. In yet further embodiments, the final radiofrequency treatment temperature T_{rf*} may be selected from the range of 115-140°C. Hence, in embodiments the method may comprise heating the flowable food product using the radiofrequency treatment system in a most downstream configured RF heating channel parts to a final radiofrequency treatment temperature T_{rf*}. In further embodiments, the method may comprise selecting the final radiofrequency treatment temperature T_{rf*} from the range of 90-150°C. In yet further embodiments, the method may comprise selecting the final radiofrequency treatment temperature T_{rf*} from the range of 115-140°C.

In embodiments, the flowable food product may be heated in the RF heating and cooling channel parts for duration of 0.005-5 min, such as 0.05-2 min, especially 0.1-1 min.

In embodiments, Tₕ₆ ≥ T_{rf*} -20°C, such as Tₕ₆ ≥ T_{rf*} -10°C. Hence, the holding temperature may be larger than or equal to 20°C (such as 10 °C) lower than the final radiofrequency temperature. Further, in embodiments, Tₕ₆ ≥ T_{rf*} -20°C, such as Tₕ₆ ≥ T_{rf*} - 10°C, i.e. the method may comprise selecting the holding temperature such that it is larger than or equal to 20°C, such as 10°C lower than the final radiofrequency temperature. However, the holding temperature and the final radiofrequency temperature may also be essentially equal, such as the same.

In embodiments, the flowable food product may reside in the temperature holding channel part for a duration in the range 1-20 min, such as 2- 10 min, especially 3-8 min.

The flowable food product may, in embodiments, be sterilized in the temperature holding channel part, however rapidly heating the flowable food product may lead to burning of (at least a part of) the flowable food product. Further, rapidly heating the flowable food product may damage the apparatus or may stick to the inner wall of the system channel. The series of RF heating channel parts, provide the advantage of increasing the temperature of the flowable food product to a temperature close to (such as within 10°C) of the temperature in the temperature holding channel part.

In embodiments, the RF heating channel parts may comprise the first RF heating channel part. In further embodiments the RF heating channel parts may comprise the second RF heating channel part. In yet further embodiments, the RF heating channel may comprise a third RF heating channel part. In embodiments, the RF heating channel parts may comprise the first RF heating channel part, the second RF heating channel part and the third RF heating channel part. Further, in embodiments, the one or more cooling channel parts may comprise the first cooling channel part, and a second cooling channel part. In further embodiments, the first cooling channel part may be configured downstream of the first RF heating channel part and upstream of the second RF heating channel part. In this embodiment, the second cooling channel part may be configured downstream of the second RF heating channel part and upstream of the third RF heating channel part.

In embodiments, the radiofrequency treatment system may comprise a first radiofrequency treatment device configured to provide radiofrequency waves to the flowable food product in the first RF heating channel part. In further embodiments, a second radiofrequency treatment device may be configured to provide radiofrequency waves to the flowable food product in the second RF heating channel part. In yet further embodiments, a third radiofrequency treatment device may be configured to provide radiofrequency waves to the flowable food product in the third RF heating channel part. In embodiments, the method may comprise providing radiofrequency waves to the flowable food product in the first RF heating channel part. In further embodiments, the method may comprise providing radiofrequency waves to the flowable food product in the second RF heating channel part. In yet further embodiments, the method may comprise providing radiofrequency waves to the flowable food product in the third RF heating channel part.

In embodiments, the first radiofrequency treatment device may be configured to heat the flowable food product in the first RF heating channel part to a first radiofrequency treatment temperature T_{rf1}. In further embodiments, the second radiofrequency treatment device may be configured to heat the flowable food product in the second RF heating channel part to a second radiofrequency treatment temperature T_{rf2}. In yet further embodiments, the third radiofrequency treatment device may be configured to heat the flowable food product in the third RF heating channel part to a third radiofrequency treatment temperature T_{rf3}.

In embodiments, T_{rf3}= T_{rf2}+ΔTₕ i.e. the third radiofrequency treatment temperature may be higher than the second radiofrequency treatment temperature by at least a temperature ΔTₕ selected from the range of 5-20°C, such as 10-15°C, and T_{rf2}= T_{rf1}+ΔTₕ, i.e. the second radiofrequency treatment temperature may be larger than the first radiofrequency treatment temperature by a temperature ΔTₕ selected from the range of 5-20°C, such as 10-15°C. The selection of the temperature to which the flowable food product is heated in a RF heating channel part may provide flexibility in configuring the system. The flowable food product may be heated to a final temperature using multiple different configurations of the radiofrequency treatment systems.

In embodiments, the radiofrequency treatment system may comprise two radiofrequency treatment devices. In such an embodiment, ΔTₕ may be relatively higher compared to an embodiment which may use three radio frequency treatment devices. The heating provided may be more gradual when three radio frequency treatment devices are used. This may be particularly advantageous for heat treating certain flowable food products which may be susceptible to overheating in local spots within the flowable food product or at the inner wall of the system channel.

Hence, in embodiments, the method may comprise heating the flowable food product in the first RF heating channel part to a first radiofrequency treatment temperature T_{rf1}. In further embodiments, the method may comprise heating the flowable food product in the second RF heating channel part to a second radiofrequency treatment temperature T_{rf2}. In further embodiments, the method may comprise heating the flowable food product in the third RF heating channel part to a third radiofrequency treatment temperature T_{rf3}. In yet further embodiments, the method may comprise T_{rf3}= T_{rf2}+ΔTₕ i.e. the third radiofrequency treatment temperature may be higher than the second radiofrequency treatment temperature by a temperature ΔTₕ selected from the range of 5-20°C, such as 10-15°C, and T_{rf2}= T_{rf1}+ΔTₕ i.e. the second radiofrequency treatment temperature may be larger than the first radiofrequency treatment temperature by a temperature ΔTₕ selected from the range of 5-20°C, such as 10-15°C.

In embodiments, each of the radiofrequency treatment devices may comprise a set of at least two electrodes functionally coupled to the respective RF heating channel part. In embodiments, the method may comprise functionally coupling each of the radiofrequency treatment devices. In further embodiments, the radiofrequency treatment device may further comprise a set of at least two electrodes to the respective RF heating channel part.

In embodiments, the system channel may be a duct (or channel) having a duct axis, wherein the duct may be configured for holding a liquid such as the flowable food product, and (ii) one or more radiofrequency treatment devices. Especially, the radiofrequency treatment device may comprise a main electrode and a first counter electrode configured for functionally connecting to an RF generator to generate during operation a first electric field in the duct between the main electrode and the first counter electrode parallel to the duct axis. Especially, the radiofrequency treatment device may comprise an electric field guiding element comprising an electrically conductive material, wherein the electric field guiding element may be configured to be electrically insulated from the electrodes during transport of the flowable food product through the duct. Especially, the system channel may be configured to transport the flowable food product and the electric field guiding element through the duct.

Further, in embodiments, a respective set of at least two electrodes may be comprised by each of the radiofrequency treatment devices. Here, functionally coupled may refer to the application of heat to the flowable food product in the RF heating channel part by means of the electric field generated between the two electrodes.

In embodiments, the RF heating channel part may comprise two electrodes wherein an alternating current may be applied between the two electrodes. In embodiments, the flowable food product may be conveyed (or flown) between the two electrodes through the system channel. Polar water molecules in the flowable food product may be forced to reorient to face opposite electrodes. This may result in the volumetric heating of the flowable food product due to the friction resulting from the movement of molecules. Further, in embodiments, the electrodes may be used to create a RF field, and the electrodes may be especially configured to substantially confine the RF field within the system channel and between the electrodes.

In embodiments, an electrode distance (Lₑ₁) between the mutually most remote electrodes of the at least two electrodes within a set may be selected from the range of 20-200 cm, such as 60-100 cm. Hence, in embodiments, the electrode distance (Lₑ₁) between the mutually most remote electrodes of the at least two electrodes within a set may be selected from the range of 20-200 cm, such as 60-100 cm. Too large a distance (such as greater than e.g. about 200 cm) between the electrodes may increase the volume over which the flowable food product is heated, which may result in inefficient heating of the flowable food product. However, electrodes configured too close to one another (such as less than 20 cm) may overheat the flowable food product, such as the flowable food product close to (or at) the inner wall of the system channel.

In embodiments, the apparatus may further comprise an electrode cooling system. In further embodiments, the electrode cooling system may be configured to cool one or more of the electrodes. Hence, in embodiments, the method may comprise cooling one or more of the electrodes using an electrode cooling system. Especially, the electrode cooling system may comprise providing a heat sink thermally coupled to the electrodes, wherein the heat sink may comprise fins to dissipate heat to the environment. Additionally or alternatively, the electrodes may be liquid cooled, wherein the electrode cooling system may comprise a cooling liquid which may be circulated around the electrodes and/or through the electrodes, hence transferring heat away from the electrodes. Here, thermally coupled refers to a heat conducting relationship between the electrode cooling system and the electrodes. In embodiments, the electrode cooling system may be configured to cool one or more electrodes to an electrode temperature Tₑ. In further embodiments, the flowable food product in a respective RF heating channel part to which the one or more electrodes are functionally coupled may be used to heat the flowable food product in the RF heating channel part to a radiofrequency treatment temperature T_{rf}. In yet further embodiments, Tₑ= T_{rf}-ΔT_{c} i.e. the radiofrequency treatment temperature may be higher in temperature than the electrode temperature by a temperature ΔT_{c} selected from the range of -5-25°C, such as 0-20°C, such as 5-15°C. Therefore, in embodiments, the method may comprise cooling the one or more electrodes to an electrode temperature Tₑ. In embodiments, the method may comprise heating the flowable food product in the RF heating channel part to a radiofrequency treatment temperature T_{rf}. More especially, Tₑ= T_{rf}-ΔT_{c} i.e. the radiofrequency treatment temperature may be higher in temperature than the electrode temperature by a temperature ΔT_{c} selected from the range of -5-25°C, such as 0-20°C, such as 5-15°C. Here, ΔT_{c} may thus also be negative, meaning that the electrode temperature may (even) be higher than the radiofrequency temperature T_{rf} by up to 5°C. Other values, however, are herein not excluded.

Cooling the flowable food product in a cooling channel part following heating in a RF heating channel part may provide the advantage of preventing overheating of the flowable food product, especially at the inner wall of the system channel. However, excessive cooling (such as by a temperature larger than 20°C) may be inefficient as the food product may have to be heated further in a subsequent part of the channel. At the same time, insufficient cooling (such as less than 5°C) may lead to the burning of the flowable food product, for example at the subsequent RF heating channel part.

In embodiments, each of the radiofrequency treatment devices may be configured to generate RF-waves between a first electrode and a second electrode of the at least two electrodes at a frequency selected from the range of 10-50 MHz, such as especially 20-35 MHz, such as in the order of 25-30 MHz. In embodiments, each of the radiofrequency treatment devices may be configured to generate over the first electrode and the second electrode an oscillating voltage in the range of 100-50,000 V, such as 500-25,000 V. Further, in embodiments, the method may comprise generating RF-waves between a first electrode and a second electrode of the at least two electrodes at a frequency selected from the range of 10-50 MHz, such as 20-35 MHz. In embodiments, the method may comprise generating over the first electrode and the second electrode an oscillating voltage selected from the range of 100-50,000 V, such as 500-25,000V. The frequency of the RF-waves may determine the temperature to which the flowable food product is heated. A higher frequency may result in a higher temperature of the flowable food product. Correspondingly, in embodiments, an oscillating voltage of 100-50,000V may be necessary to achieve the said frequency of the radiofrequency treatment devices. In a specific embodiment, the radiofrequency treatment device may comprise a radio frequency (RF) wave generator (optionally in combination with an impedance matching circuit) may be configured to generate RF-waves between the first electrode and the second electrode at a frequency selected from the range of 10-50 MHz, especially 20-35 MHz.

In embodiments, the radiofrequency treatment system may comprise a first cooling device configured to cool the flowable food product (close to the system channel wall) in the first cooling channel part to a first cooling temperature T_{c1}. In further embodiments, the radiofrequency treatment system may comprise a second cooling device configured to cool the flowable food product (close to the system channel wall) in the second cooling channel part to a second cooling temperature T_{c2}. In embodiments, T_{c2}= T_{rf2}-ΔT_{c} i.e. the second radiofrequency treatment temperature may be larger than the second cooling temperature by a temperature ΔT_{c} selected from the range 0-20°C, such as 5-15°C and T_{c1}= T_{rf1}-ΔT_{c} i.e. the first radiofrequency treatment temperature may be larger than the first cooling temperature by a temperature ΔT_{c}, wherein the values for ΔT_{c} may be selected from the range of 0-20°C, such as 5-15°C.

Likewise, in embodiments, the method may comprise cooling the flowable food product (close to the system channel wall) in the first cooling channel part to a first cooling temperature T_{c1}. In embodiments, the method may comprise cooling the flowable food product (close to the system channel wall) in the second cooling channel part to a second cooling temperature T_{c2}. In embodiments, T_{c2}= T_{rf2}-ΔT_{c} i.e. the second radiofrequency treatment temperature may be larger than the second cooling temperature by at least a temperature ΔT_{c} selected from the range 0-20°C, such as 5-15°C, and T_{c1}= T_{rf1}-ΔT_{c} i.e. the first radiofrequency treatment temperature may be larger than the first cooling temperature by at least a temperature ΔT_{c} selected from the range 0-20°C, such as 5-15°C.

In embodiments, the radio frequency treatment system may comprise the cooling device which may be configured to cool the flowable food product in the cooling channel part of the system channel. In embodiments, the cooling device may cool the flowable food product in the first cooling channel part (of the system channel) to a temperature lower than the temperature of the flowable food product in the first RF heating channel part by at least a temperature ΔT_{c}.

Note that the bulk temperature of the flowable food product, especially the temperature of the flowable food product at a location away from the inner walls of the system channel may remain essentially unchanged. Hence, there may exist, temperature differences between the temperature of the flowable food product in the bulk (or close to the center of the system channel) and at the walls of the system channel. Hence, the one or more cooling parts may provide the benefit of cooling the flowable product (mainly) at the walls of the system channel. Hence, the intermediate cooling allows a subsequent heating state. Would the intermediate cooling not be applied, and (only) the RF heating is used to heat the flowable food product in the system channel to a desired temperature, (due to the disproportionate temperature distribution at the walls compared to the center of the system channel) the temperature of the flowable food product at the wall may be (significantly) higher to such an extent, that the flowable food product may deteriorate. Therefore, with the intermediate cooling, the difference in temperature between the flowable food product at the wall and the bulk temperature of the flowable food product is reduced, allowing a more uniform or homogenous temperature distribution at the next heating stage. Thereby, a safe but relatively fast heating may be provided.

In embodiments, the flowable food product may have a temperature T_{rfW1} at a wall of first RF heating channel part, and a temperature T_{rfW2} at a wall of second RF heating channel part. Especially, the first cooling device may be configured to cool the flowable food product in the first cooling channel part to a temperature T_{cW1} at a wall of the first cooling channel part. Further, in embodiments, the second cooling device may be configured to cool the flowable food product in the second cooling channel part to a temperature T_{cW2} at a wall of the second cooling channel part. Especially, T_{cW2}= T_{rf2}+ΔT_{c} and T_{c1}= T_{rf1}+ΔT_{c}, wherein the values for ΔT_{c} may be individually selected from the range of 0-20°C, such as 5-15 °C. Analogously, the method may comprise cooling the flowable food product in the first cooling channel part to a temperature T_{cW1} at a wall of the first cooling channel part. Especially, the method may comprise cooling the flowable food product in the second cooling channel part to a temperature T_{cW2} at a wall of the second cooling channel part. More especially, T_{cW2}= T_{rf2}+ΔT_{c} and T_{c1}= T_{rf1}+ΔT_{c}. Further, in embodiments, the method may comprise selecting the values for ΔT_{c} from the range of 0-20°C, such as 5-15 °C.

In embodiments, each of the one or more cooling channel parts may comprise a tube-in-tube configuration with a cooling channel enclosing part of the system channel. In embodiments, a length (L_{c1}) of the cooling channel defined parallel to the part of the system channel enclosed by the cooling channel may be selected from the range of 20-200 cm, such as 50-150 cm. Hence, in embodiments, the method may comprise selecting a length (L_{c1}) of the cooling channel defined parallel to the part of the system channel enclosed by the cooling channel from the range of 20-200 cm, such as 50-150 cm. A large cooling channel length (L_{c1}), such as greater than 200 cm may make the radio frequency treatment system inefficient, since cooling may have to be provided over a large volume of the system channel through which the flowable food product is flown. Further, this may also lead to excessive cooling of the flowable food product, which may be inefficient, since this may have to be compensated for at a RF heating channel part configured further downstream in the system channel. However, a small cooling channel length (L_{c1}), such as less than 20 cm may not provide sufficient cooling of the flowable food product. This is undesirable, as it may lead to burning or fouling of the flowable food product, especially close to (or at) the inner wall of the system channel.

In embodiments, L_{c1}≤ Lₑ₁ i.e. the length (L_{c1}) of the cooling channel defined parallel to the part of the system channel enclosed by the cooling channel may be smaller than or equal to the electrode distance (Lₑ₁) between the mutually most remote electrodes of the at least two electrodes within a set.

Likewise, in embodiments, the method may comprise selecting L_{c1} and Lₑ₁, such that L_{c1}≤ Lₑ₁ i.e. the length (L_{c1}) of the cooling channel defined parallel to the part of the system channel enclosed by the cooling channel may be smaller than or equal to the electrode distance (Lₑ₁) between the mutually most remote electrodes of the at least two electrodes within a set.

In embodiments, the apparatus may comprise n sets of each an RF heating channel part and a cooling channel part. In further embodiments, these n sets may be configured downstream of the RF heating channel parts comprised by the set. In yet further embodiments, n may be selected from the range of 4-10. Increasing the number of sets of the RF heating channel part and the cooling channel part may provide the advantage of determining the rate at which heating is provided from gradual heating to rapid heating. When the same final temperature of the flowable food product is achieved using an embodiment with low number of sets such as 4, the difference in temperature between the different RF heating channel parts in each set may be high (compared to an embodiment with more sets).

Alternatively, in embodiments using a larger number of sets of the RF heating channel part and the cooling channel part may provide more gradual heating i.e. the difference in temperature between the subsequent RF heating channel parts in each set may be low (compared to an embodiment with fewer sets). Hence, the apparatus may be configured in dependence of the desired heating profile according to which heat is provided to the flowable food product. The term "heating profile" refers to the temperature distribution of the flowable food product over the cross-section of the system channel. This may be subjective to the type of flowable food product to be heated. Hence, further providing the advantage of flexibility to heat treat a wide variety of different food products. Likewise, in embodiments, the method may comprise selecting n sets of each an RF heating channel part and a cooling channel part. In embodiments, the method may comprise configuring these n sets downstream of the RF heating channel parts comprised by the set. In yet further embodiments, the method may comprise selecting n from the range of 4-10.

The choice of the number of sets may provide additional control over the heating of the flowable food product. Dependent on the type of food product flown in the system channel, in embodiments, the number of sets used to heat treat the flowable food product may be selected. The thermal conductivity of a mixture of solid food particles and liquid food materials comprised by the flowable food product may vary based on its constituent materials as well as the distribution of these materials within the flowable food product. Hence, there may be a distribution in the value of thermal conductivity within the system channel. Altering the number of sets in embodiments (such as between 4-10), may provide the advantage of gradually heating the flowable food product to a high temperature such as in the range 80-150°C, such as in the range 90-140°C.

In embodiments, the apparatus may further comprise a cooling system. In further embodiments, the cooling system may be configured downstream of the temperature holding system. In yet further embodiments, the system channel may comprise a cooling system channel part. In further embodiments, the cooling system may be configured to cool the flowable food product in the cooling system channel part to a cooling temperature T_{c7}. Likewise, in embodiments the method may comprise cooling the flowable food product in the cooling system channel part to a cooling temperature T_{c7}. In embodiments, the cooling system may comprise one or more (aseptic) scraped surface heat exchangers. In embodiments, the cooling system comprising one or more (aseptic) scraped surface heat exchangers. In embodiments, the cooling temperature T_{c7} may be selected from the range of 1-45°C, such as 1-20°C. Hence, in embodiments, the method may comprise selecting the cooling temperature T_{c7} from the range of 1-45°C, such as especially 1-20°C.

In embodiments, the cooling system may comprise one or more (aseptic) scraped surface heat exchangers. Scraped surface heat exchangers (SSHE) may especially have two concentric heat exchange surfaces. These surfaces may be continuously scraped improving the efficiency of heat transfer. Further, the SSHE may prevent (even highly viscous) flowable food product from sticking to the heat exchange surfaces.

In embodiments, the heat exchangers may be tube-in-tube heat exchangers (or "jacketed tube" heat exchanger). Further, in embodiments, the heat exchangers may be spiral-in-spiral heat exchangers . Especially, wherein the outer ring of the heat exchanger may be insulated, or cooling liquid may be flowed through the outer section of the heat exchanger.

Hence, in embodiments the cooling system may comprise a tube-in-tube configuration. This may be part of the system channel. Alternatively or additionally, in embodiments the cooling system may comprise a spiral-in-spiral configuration. This may be part of the system channel.

In embodiments, the apparatus may comprise a buffer tank, especially an aseptic buffer tank. In further embodiments, the (aseptic) buffer tank may be configured downstream of the temperature holding system and downstream of the (optional) cooling system. In yet further embodiments, the aseptic buffer tank may be configured to buffer the flowable food product. Hence, in embodiments the method may comprise buffering the flowable food product by the aseptic buffer tank. In further embodiments, the method may comprise configuring the aseptic buffer tank downstream of the temperature holding system and downstream of the (optional) cooling system.

The flowable food product may be produced in a kitchen. The kitchen may have a maximum capacity of 2000 kg/h and hence, the aseptic buffer tank may be designed to accommodate the maximum capacity of the flowable food product i.e. the aseptic buffer tank may have a maximum collectable volume of at least 2000 kg, such as at least, 2500 kg, such as 3000 kg. When in operation, the kitchen may provide a minimum capacity of the flowable food product such as 100 Kg/h. Consequently, in embodiments, the aseptic buffer tank may have a minimum collectable volume of 100 Kg. To avoid any wastage of the flowable food product, the aseptic buffer tank may (at least) accommodate the minimum capacity of the flowable food product produced by the kitchen.

In embodiments, the buffer tank may be designed to allow storing under aseptic conditions. This may include the design of the tanks, but may further extend to the design of joints, dynamic elements, coupling, seals, valves, pipework, vents, filters, and instruments. In embodiments, the tank may be equipped with mixing devices. The mixing device may retain the integrity of the flowable food product. The mixing of the flowable food product in the aseptic buffer tank may avoid the sinking of particles. The mixing of the flowable food product may further ensure homogeneity of the flowable food product. Further, the mixing may guarantee food product consistency without damaging the liquid and fluid matrix (i.e. mixing may be restricted to low shear mixing) over a period of at least 5 days.

In embodiments, the aseptic buffer tank may be pressurized. The correct counter pressure may prevent boiling of at least part of the flowable food product. Further, the pressurized tank may facilitate the transfer of the flowable food product to the aseptic filler downstream of the aseptic buffer tank. In embodiments, the aseptic buffer tank may comprise a cooling jacket. The cooling jacket may provide the advantage of regulating the temperature of the flowable food product in the aseptic buffer tank.

In embodiments, the apparatus may further comprise an aseptic filling system. In embodiments, the aseptic filling system may be configured downstream of the temperature holding system and downstream of the (optional) cooling system. In yet further embodiments, the aseptic filling system may be configured downstream of the temperature holding system, downstream of the (optional) cooling system, and downstream of the (optional) aseptic buffer tank. In other embodiments, the aseptic filling system may be configured to package flowable food product in packages.

In embodiments, the method may comprise packaging the flowable food product in packages by the aseptic filling system. In further embodiments, the method may comprise configuring the aseptic filling system downstream of the temperature holding system and downstream of the (optional) aseptic buffer tank. In embodiments, the aseptic filling system may be used to package the flowable food product in packages. In further embodiments, these packages may be a pouch, or a pot, or a plastic tray, or a glass jar, or a bag. In yet further embodiments, these packages may be presterilized. In embodiments, the filling system may fill or package the flowable food product at surrounding ambient temperature. The product prior to filling or packaging may be in the range 20-35 °C.

In embodiments, the aseptic filling system may comprise a bag in box filler. In further embodiments, the bag in box filler may be configured to fill 1-25 liter bags. In yet further embodiments, the bag in box fillers may have a throughput of at least 5 bags per minute for the minimum volume of 1 liter, and at least 1 bag per minute for the minimum volume of 25 liter. In embodiments, the aseptic filling system may comprise an aseptic cabinet filler. In further embodiments, the aseptic cabinet filler may have a non-dripping nozzle. In specific embodiments, the aseptic cabinet filler may have a calibrated valve opening and closing mechanism. In other specific embodiments, the aseptic cabinet filler may be configured to fill a pack within a duration of 30s. In yet further embodiments, the aseptic cabinet filler may comprise nitrogen flushing of the pack before filling of food product in the pack.

In embodiments, the system channel may comprise tubes having cross-sectional dimensions (d2) selected from the range of 20-100 mm, especially 30-80 mm. Likewise, in embodiments, the method may comprise selecting tubes comprised by the system channel having cross-sectional dimensions (d2) from the range of 20-100 mm, especially 30-80 mm. In embodiments, the entire system channel may comprise a uniform diameter. In other embodiments, the diameter of the RF heating channel part may be different from the diameter of the cooling channel part. In further embodiments, the diameter of the system channel in the RF heating channel part and the cooling channel part may be different from the diameter of the system channel in the temperature holding channel part. Especially, however, the diameter all over the length system channel may essentially be the same.

The diameter of the system channel part at a location may influence the velocity of the flowable food product in that location. It will be apparent to the skilled person that fluid velocity increases when the cross-sectional area decreases and vice versa as a result of continuity (i.e. mass conservation). For instance, an increase in diameter downstream may result in the reduction of the velocity of the flowable food product. In embodiments, the circular equivalent diameter of the RF heating channel part may be a factor 0.5 to 1.5 times the local circular equivalent diameter of the cooling channel part, such as a factor 0.75 to 1.25 times the local circular equivalent diameter of the cooling channel part. This may provide the advantage of locally controlling the velocity of the flowable food product in a part of the system channel by altering the local (circular equivalent) diameter of the system channel. This may further provide the advantage of controlling the duration of time for which the flowable food product is heated (or cooled) by altering the local (circular equivalent) diameter of the system channel.

In embodiments, the (inner) diameter of the system channel may be selected from the range of 15-100 mm, such as selected from the range 20-80 mm, like about 25-80 mm. In embodiments, the inner diameter of the system channel may be maintained constant over the entire length of the system channel. In embodiments, the inner diameter of the system channel may (also) vary over the length of the system channel.

In embodiments, the system channel may have a diameter nominal DN selected from the range DN 25 - DN 80, especially DN 32 - 60, such as DN 40. Here, DN refers to *"Diameter nominal"* (or "nominal diameter"). Nominal diameter is a pipe diameter designation system according to ISO 6708 for specifying diameter of metric pipe components. The "DN" is a dimensionless number, which is a nominal value that may be roughly compared to an equivalent measure in mm (but is not exactly the same value). The accurate metric equivalent measures to "DN" are specified by ISO 6708 standard.

The Reynolds number of the flowable food product may be in dependence of the diameter of the system channel. Hence, the inner diameter of the system channel may be selected in dependence of the desired Reynolds number of the flow, especially such that the flow is laminar.

In embodiments, the cross-sectional dimensions of the system channel determine the Reynolds number of the flowable food product. In embodiments where the system channel may have a non-circular cross-section, the equivalent circular diameter may be used to determine the Reynolds number of the flowable food product. The equivalent circular diameter (or ECD) (or "circular equivalent diameter") of an (irregularly shaped) two-dimensional shape is the diameter of a circle of equivalent area. For instance, the circular equivalent diameter of a square with side a is 2*a*SQRT(1/π). For a circle, the diameter is the same as the circular equivalent diameter. Would a circle in an xy-plane with a diameter D be distorted to any other shape (in the xy-plane), without changing the area size, then the equivalent circular diameter of that shape would be D. Note that reducing (or increasing) the local circular equivalent diameter of the system channel is analogous to reducing (or increasing) the local cross-sectional area of the system channel.

In embodiments, the apparatus may comprise a preheating system configured upstream of the radiofrequency treatment system. In further embodiments, the channel system may comprise a preheating channel part. In yet further embodiments, the preheating system may be configured to heat the flowable food product in the preheating channel part to a preheating temperature Tₚₕ. In embodiments, the method may comprise preheating the flowable food product in the preheating channel part to a preheating temperature Tₚₕ. Rapidly heating a flowable food product over a large temperature range may result in overheating of the flowable food product, such as at the inner wall of the system channel. Hence, it may be advantageous to preheat the flowable food product before being flown through the system channel, such as before being heated by radiofrequency treatment system.

In embodiments, the preheating temperature Tₚₕ may be selected from the range of 50-90°C, such as 50-75°C. In embodiments, the method may comprise selecting the preheating temperature Tₚₕ from the range of 50-90°C, such as 50-75°C.

In embodiments, the preheating system may comprise one or more (aseptic) scraped surface heat exchangers. In embodiments, (aseptic) scraped surface heat exchangers may comprise spring loaded rotating blades configured to scrape the inner wall of the system channel and remove any flowable food product from it. This may provide the advantage of removing any fouling substance deposited on the inner wall of the system channel. Thus, ensuring that contamination of the process liquid may be reduced to a minimum, which may be crucial to taste and texture of the food product. In embodiments, the method may comprise selecting the preheating system comprising one or more (aseptic) scraped surface heat exchangers.

In embodiments, the apparatus may further comprise a cooking system. In further embodiments, the cooking system may be configured to produce the flowable food product. In embodiments, the method may comprise producing the flowable food product using the cooking system. In embodiments, the cooking system may be configured to generate a flowable food product having a viscosity selected from the range of 1-30000 mPa·s, such as 2-10000 mPa·s, such as 10-5000 mPa·s at ambient conditions. In embodiments, the method may comprise selecting the viscosity of the flowable food product from the range of 1-30000 mPa·s, such as 2-10000 mPa·s, such as 10-5000 mPa·s at ambient conditions. Here, "Pa·s" refers to the unit Pascal-second for dynamic viscosity. "Viscosity" here may refer to an effective viscosity considering (also) an approximation to account for the presence of solid particles.

In embodiments, the viscosity of the continuous phase i.e. the liquid part of the flowable food product may vary in the range 1-30000 mPa·s, such as 2-10000 mPa·s, such as 10-5000 mPa·s. Further, these viscosities may vary as a function of temperature. The density of the liquid part of the flowable food product may vary in the range 920-1050 kg/m³ and the density of the solid part of the flowable food product may be in the range 980-1400 kg/m³. The kinematic viscosity of the liquid part of the flowable food product may now be defined as the ratio of the viscosity of the fluid to the fluid's density.

A Reynolds number of the flow may be defined as the product of the velocity of the flowable food product, and the diameter of the system channel divided by the kinematic viscosity of the flowable food product. Typical Reynolds numbers below 2000 suggests a laminar flow. The velocity of the flowable food product may influence the fluid dynamic characteristics of the flowable food product. It may be desirable for the flowable food product to maintain a substantially laminar flow. A final fibrous texture of food product may be achieved by maintaining the flowable food product in a laminar flow. Laminar flow is a type of flow pattern of a fluid in which all the particles are flowing in parallel lines, as opposed to turbulent flow, where the particles flow in (seemingly) random and chaotic directions. In embodiments, the apparatus may be configured to flow the flowable food product with a laminar flow through the RF heating channel parts and the one or more cooling channel parts. In embodiments, the method may comprise flowing the flowable food product with a laminar flow through the RF heating channel parts and the one or more cooling channel parts.

In embodiments, the cooking system may be configured to generate a flowable food product comprising food particles having one or more dimensions selected from the range of 0.15*d2-0.6*d2, such as 0.1*d2-0.5*d2. Likewise, in embodiments, the method may comprise selecting the food particles comprised by the flowable food product from a group having one or more dimensions in the range of 0.15*d2-0.6*d2, such as 0.1*d2-0.5*d2.

In embodiments, the flowable food product may comprise food particles which may vary in size from 10-50% of the diameter, such as 20-35% of the diameter of the system channel (though smaller sizes may also be possible such as 1-35%, like 2-35%). In embodiments, the cooking system may be a batch-wise operated cooking system. In embodiments, the method may comprise selecting the cooking system comprising a batch-wise operated cooking system. The size of the particles may refer to one or more of length, height, width, or diameter. For instance, the particles may have sizes selected from the range of about 5-25 mm, more especially about 9-20 mm. The fact that such sized particles are available, does not exclude the optional presence of smaller particles. Here, it may especially be referred to the largest particles. In embodiments, at least 25 wt% of the particles has dimensions selected from the range of 5-25 mm.

Especially, the inner diameter of the system channel may constant over (essentially) the entire length of the system channel.

In specific embodiments, the apparatus may comprise one or more valves. Especially, between a cooking system (see also below) and the system channel, there may be one or more valves. Also e.g. between the system channel and an (aseptic) filler, there may be one or more valves. However, also elsewhere the channel system may comprise one or more valves. Hence, in embodiments, the apparatus may comprise one or more valves. In further embodiments, one or more of the valves may comprise arc valves. In embodiments, the method may comprise selecting one or more valves, comprising one or more of the one or more valves comprise arc valves. Arc valves are automatic recirculation valves. These valves are multifunctional valves that may ensure that a pre-determined minimum flow is assured through the pump at all times. In embodiments, the valves may be designed to be "fail-safe" in the event of mechanical or electrical failure.

In specific embodiments, the valves may be designed with openings large enough to allow the passage of food particles in the flowable food product. This provides the advantage of facilitating smooth operation without any line blockages. In other embodiments, double seat, mix-proof or black and bleed valves may be used. These valves provide the advantage of preventing the intermixing of incompatible fluids.

In embodiments, the apparatus may comprise a control system. Especially, the control system may be configured to control one or more of the flow rate, temperature of the RF heating channel part(s), the cooling channel part(s), the holding temperature, and the preheating temperature.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions from a remote control. In embodiments, the control system may be controlled via an App on a device, such as a portable device, like a Smartphone or I-phone, a tablet, etc.. The device is thus not necessarily coupled to the apparatus, but may be (temporarily) functionally coupled to the apparatus.

Hence, in embodiments the control system may (also) be configured to be controlled by an App on a remote device. In such embodiments the control system may be a slave control system or control in a slave mode. The control system may be configured to be controlled by an external control system which has access to the apparatus on the basis of knowledge (input by a user interface of with an optical sensor (e.g. QR code reader) of the (unique) code. The apparatus may also comprise means for communicating with other systems or devices, such as on the basis of Bluetooth, Thread, WIFI, LiFi, ZigBee, BLE or WiMAX, or another wireless technology.

The system, or apparatus, or device may execute an action in a "mode" or "operation mode" or "mode of operation" or "operational mode". The term "operational mode may also be indicated as "controlling mode". Likewise, in a method an action or stage, or step may be executed in a "mode" or "operation mode" or "mode of operation" or "operational mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

### BRIEF DESCRIPTION OF THE DRAWINGS

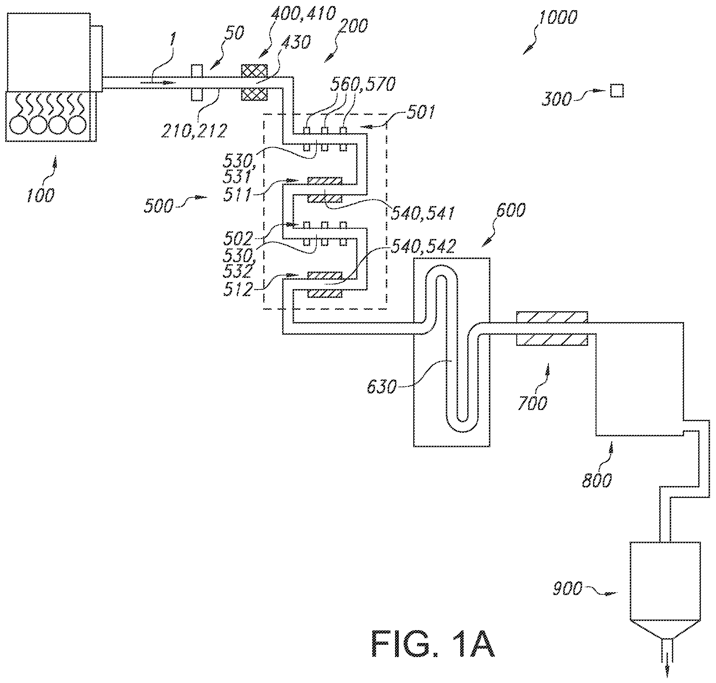

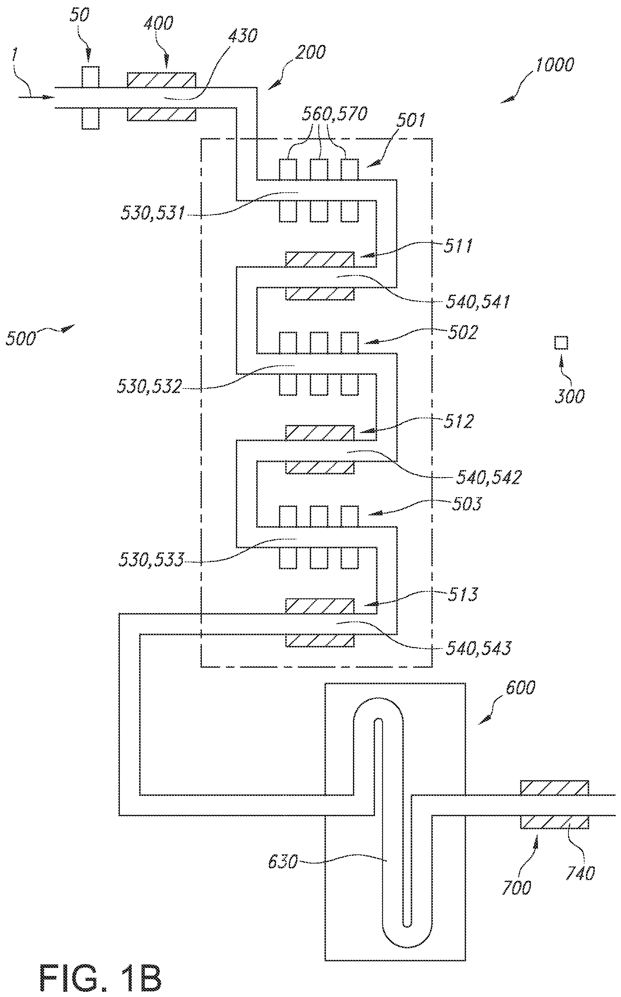

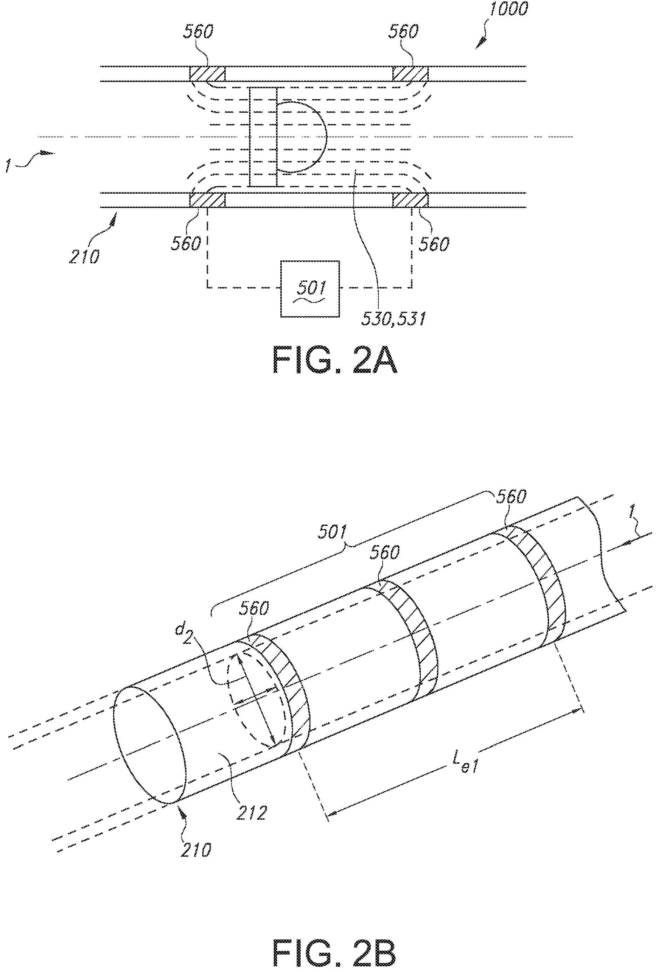

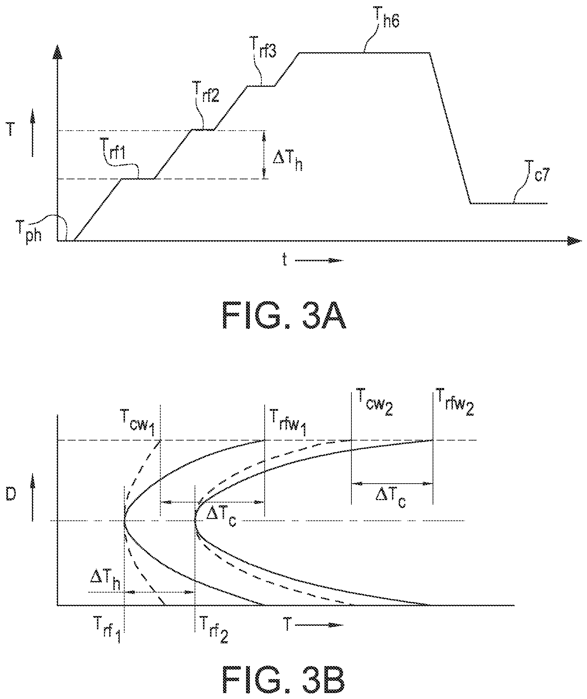

Embodiments of the invention will now be described, by way of example only, with reference to the accompanying schematic drawings in which corresponding reference symbols indicate corresponding parts, and in which: Fig. 1A schematically depicts an embodiment of an apparatus 1000 for heat treating a flowable food product 1; Fig. 1B schematically depicts an embodiment of an apparatus 1000 comprising 3 RF heating channel parts 530 and 3 cooling channel parts 540; Fig. 2A schematically depicts a cross-sectional view of the RF heating channel part 530; Fig. 2B schematically depicts an isometric view of the RF heating channel part 530; and Fig. 3A depicts the temperature variation with time of the flowable food product 1 as it is flowed through the system channel 210. Fig. 3B depicts the temperature profile in a cross-section of the system channel. The schematic drawings are not necessarily to scale.

### DETAILED DESCRIPTION OF THE EMBODIMENTS

Fig. 1A schematically depicts an embodiment of an apparatus 1000 for heat treating a flowable food product 1, wherein the apparatus 1000 may comprise a channel system 200, a radiofrequency treatment system 500, and a temperature holding system 600. The channel system 200 may comprise a system channel 210; wherein the system channel 210 may comprise RF heating channel parts 530, one or more cooling channel parts 540, and a temperature holding channel part 630. The radiofrequency treatment system 500 may comprise an arrangement wherein at least a first RF heating channel part 531 may be configured upstream of a first cooling channel part 541, and wherein the first cooling channel part 541 may be configured upstream of the second RF heating channel part 532. The radiofrequency treatment system 500 may be configured to (a) provide radiofrequency waves to the flowable food product 1 in the RF heating channel parts 530 and (b) cool the flowable food product 1 in the one or more cooling channel parts 540, according to a temperature distribution wherein a temperature of the flowable food product 1 in a cooling channel part 540 downstream of a RF heating channel part 530 is lower than the temperature of the flowable food product 1 in the RF heating channel part 530 configured upstream of that cooling channel part 540. Further, the temperature of the flowable food product 1 in a RF heating channel part 530 may be configured downstream of a set of a RF heating channel part 530 and a cooling channel part 540 may be higher than that of the flowable food product 1 in the RF heating channel part 530 of that set. The temperature holding system 600 may be configured downstream of the radiofrequency treatment system 500 and may be configured to maintain the flowable food product 1 in the temperature holding channel part 630 at a holding temperature Tₕ₆.

In embodiments, the holding temperature Tₕ₆ may be selected from the range of 90-150°C. In further embodiments, the holding temperature Tₕ₆ may be selected from the range of 115-135°C. In embodiments, the apparatus 1000 may be configured to maintain the flowable food product 1 in the temperature holding channel part 630 at the holding temperature Tₕ₆ during a heating time selected from the range of 0.5-10 minutes. In embodiments, the radiofrequency treatment system 500 may be configured to heat the flowable food product 1 in a most downstream configured RF heating channel parts 530 to a final radiofrequency treatment temperature T_{rf*}. In further embodiments, the final radiofrequency treatment temperature T_{rf*} may be selected from the range of 90-150°C. In embodiments, the final radiofrequency treatment temperature T_{rf*} may be selected from the range of 115-140°C. In embodiments, T_{rf*} may be larger than or equal to Tₕ₆ by at least 10°C.

In embodiments, the RF heating channel parts 530 may comprise the first RF heating channel part 531, and the second RF heating channel part 532. In further embodiments, the one or more cooling channel parts 540 may comprise the first cooling channel part 541, and a second cooling channel part 542. In embodiments, the first cooling channel part 541 may be configured downstream of the first RF heating channel part 531 and upstream of the second RF heating channel part 532. In further embodiments, the second cooling channel part 542 may be configured downstream of the second RF heating channel part 532. In embodiments, the radiofrequency treatment system 500 may comprise a first radiofrequency treatment device 501 configured to provide radiofrequency waves to the flowable food product 1 in the first RF heating channel part 531. In embodiments, the first radiofrequency treatment device 501 may be configured to heat the flowable food product 1 in the first RF heating channel part 531 to a first radiofrequency treatment temperature T_{rf1}. In embodiments, each of the radiofrequency treatment devices 501 may comprise a set of at least two electrodes 560 functionally coupled to the respective RF heating channel part 530. In embodiments, an electrode distance (Lₑ₁) between the mutually most remote electrodes 560 of the at least two electrodes 560 within a set may be selected from the range of 20-200 cm, such as about 60-100 cm. Especially, the electrode cooling system 570 may be configured to cool one or more of the electrodes. In yet further embodiments, the flowable food product 1 in a respective RF heating channel part 530 to which the one or more electrodes are functionally coupled 560 may be used to heat the flowable food product 1 in the RF heating channel part 530 to a radiofrequency treatment temperature T_{rf}, wherein Tₑ= T_{rf}-ΔT_{c}, wherein the values for ΔT_{c} may be individually selected from the range of 0-20°C. In embodiments, each of the radiofrequency treatment devices 501 may be configured to generate RF-waves between a first electrode and a second electrode of the at least two electrodes 560 at a frequency selected from the range of 10-50 MHz, and wherein the radiofrequency treatment devices 501 may be configured to generate over the first electrode and the second electrode an oscillating voltage in the range of 100 - 50,000 V. In embodiments, the radiofrequency treatment system 500 may comprise (i) a first cooling device 511 configured to cool the flowable food product 1 in the first cooling channel part 541 to a first cooling temperature T_{c1}, and (ii) a second cooling device 512 configured to cool the flowable food product 1 in the second cooling channel part 542 to a second cooling temperature T_{c2}, wherein T_{c2}= T_{rf2}-ΔT_{c} and T_{c1}= T_{rf1}-ΔT_{c}, wherein the values for ΔT_{c} are individually selected from the range of 5-20°C.

In embodiments, the RF inline heating apparatus 1000 may further comprise a pump system 50, wherein the pump system 50 may be configured to flow the flowable food product 1 with an average flow velocity of at least 0.25 m/s through the system channel 210. In embodiments, the RF inline heating apparatus 1000 may be configured to flow the flowable food product 1 with a laminar flow through the RF heating channel parts 530 and the one or more cooling channel parts 540. In embodiments, the method may comprise selecting a length (L_{c1}) of the cooling channel defined parallel to the part of the system channel enclosed by the cooling channel from the range of 20-200 cm.

In another aspect, the invention may be a method for heat treating a flowable food product 1 using an apparatus 1000. In embodiments, the method may comprise providing radiofrequency waves to the flowable food product 1 in the RF heating channel parts 530. In further embodiments, the method may comprise cooling the flowable food product 1 in the one or more cooling channel parts 540, according to a temperature distribution wherein a temperature of the flowable food product 1 in a cooling channel part 540 downstream of a RF heating channel part 530 is lower than the temperature of the flowable food product 1 in the RF heating channel part 530 configured upstream of that cooling channel part 540, and wherein a temperature of the flowable food product 1 in a RF heating channel part 530 configured downstream of a set of a RF heating channel part 530 and a cooling channel part 540 is higher than of the flowable food product 1 in the RF heating channel part 530 of that set. In further embodiments, the method may comprise maintaining the flowable food product 1 in the temperature holding channel part 630 at a holding temperature Tₕ₆.

In embodiments, the method may comprise flowing the flowable food product 1 with a flow velocity of at least 0.25 m/s through the system channel 210. In embodiments, the method may comprise heating the flowable food product 1 to a holding temperature Tₕ₆ selected from the range of 90-150°C. In further embodiments, the method may comprise heat treating the flowable food product 1 to a holding temperature Tₕ₆ selected from the range of 115-135°C. In embodiments, the method may comprise maintaining the flowable food product 1 in the temperature holding channel part 630 at the holding temperature Tₕ₆ over a heating time period selected from the range of 0.5-10 minutes.

In embodiments, the method may comprise heating the flowable food product 1 using the radiofrequency treatment system 500 in a most downstream configured RF heating channel parts 530 to a final radiofrequency treatment temperature T_{rf*}. In further embodiments the final radiofrequency treatment temperature T_{rf*} may be selected from the range of 90-150°C. In embodiments, the method may comprise selecting the final radiofrequency treatment temperature T_{rf*} from the range of 115-140°C. In embodiments, the method may comprise providing radiofrequency waves to the flowable food product 1 in the first RF heating channel part 531. In embodiments, the method may comprise heating the flowable food product 1 in the first RF heating channel part 531 to a first radiofrequency treatment temperature T_{rf1}. In embodiments, the method may comprise functionally coupling the radiofrequency treatment devices 501 which further comprise a set of at least two electrodes 560 to the respective RF heating channel part 530. In embodiments, the method may comprise selecting an electrode distance (Lₑ₁) between the mutually most remote electrodes 560 of the at least two electrodes 560 within a set from the range of 20-200 cm, such as 60-100 cm. In embodiments, the method may comprise generating RF-waves between a first electrode and a second electrode of the at least two electrodes 560 at a frequency selected from the range of 10-50 MHz, and generating over the first electrode and the second electrode an oscillating voltage selected from the range of 100 - 50,000 V.

In embodiments, the apparatus may comprise a control system 300. Especially, the control system 300 may be configured to control one or more of the flow rate, temperature of the RF heating channel part(s), the cooling channel part(s), the holding temperature, and the preheating temperature.

Further, in embodiments, the apparatus may comprise a cooling system 700, configured downstream of the temperature holding system 600, wherein the system channel 210 comprises a cooling system channel part 740, wherein the cooling system 700 is configured to cool the flowable food product 1 in the cooling system channel part 740 to a cooling temperature T_{c7}, wherein the cooling temperature T_{c7} is selected from the range 1-45°C.

In embodiments, the apparatus may comprise a buffer tank 800, especially an (aseptic) buffer tank 800. Further, in embodiments, the (aseptic) buffer tank 800 may be configured downstream of the temperature holding system 600 and downstream of the (optional) cooling system 700. Especially, the (aseptic) buffer tank 800 may be configured to buffer the flowable food product 1. In embodiments, the apparatus 1000 may further comprise an (aseptic) filling system 900. In embodiments, the (aseptic) filling system 900 may be configured downstream of the temperature holding system 600 and downstream of the (optional) cooling system 700. Especially, the (aseptic) filling system 900 may be configured to package flowable food product in packages 1.

In embodiments, the apparatus 1000 may further comprise a cooking system 100 configured to produce the flowable food product 1.

Fig. 1B schematically depicts an embodiment of an apparatus 1000 for heat treating a flowable food product 1, wherein the apparatus 1000 comprises a channel system 200, a radiofrequency treatment system 500, and a temperature holding system 600. The channel system 200 may comprise a system channel 210. The temperature holding system 600 is configured downstream of the radiofrequency treatment system 500 and is especially configured to maintain the flowable food product 1 in the temperature holding channel part 630 at a holding temperature. The RF heating channel parts 530 of the embodiment comprise the first RF heating channel part 531, the second RF heating channel part 532, and a third RF heating channel part 533. Further, the one or more cooling channel parts 540 comprise the first cooling channel part 541, and a second cooling channel part 542, wherein the first cooling channel part 541 is configured downstream of the first RF heating channel part 531 and upstream of the second RF heating channel part 532, and the second cooling channel part 542 is configured downstream of the second RF heating channel part 532 and upstream of the third RF heating channel part 533. Further, the radiofrequency treatment system 500 may comprise (i) a first radiofrequency treatment device 501 configured to provide radiofrequency waves to the flowable food product 1 in the first RF heating channel part 531, (ii) a second radiofrequency treatment device 502 configured to provide radiofrequency waves to the flowable food product 1 in the second RF heating channel part 532; (iii) a third radiofrequency treatment device 503 configured to provide radiofrequency waves to the flowable food product 1 in the third RF heating channel part 533. Especially, the first radiofrequency treatment device 501 may be configured to heat the flowable food product 1 in the first RF heating channel part 531 to a first radiofrequency treatment temperature T_{rf1}, the second radiofrequency treatment device 502 may be configured to heat the flowable food product in the second RF heating channel part 532 to a second radiofrequency treatment temperature T_{rf2}, and wherein the third radiofrequency treatment device 503 may be configured to heat the flowable food product 1 in the third RF heating channel part 533 to a third radiofrequency treatment temperature T_{rf3} . Further, these temperatures may be determined such that T_{rf3}= T_{rf2}+ΔTₕ, and T_{rf2}= T_{rf1}+ΔTₕ, wherein the values for ΔTₕ are individually selected from the range of 5-20°C. In embodiments, the apparatus 1000 may comprise a third cooling device 513 to cool the flowable food product 1 in a third cooling channel part 543 configured downstream of the third heating channel part 533.

In embodiments, the apparatus may comprise a preheating system 400 configured upstream of the radiofrequency treatment system 500, wherein the channel system 210 may comprise a preheating channel part 430, wherein the preheating system 400 may be configured to heat the flowable food product 1 in the preheating channel part 430 to a preheating temperature Tₚₕ. Especially, the preheating temperature Tₚₕ may be selected from the range of 50-90°. In embodiments, the preheating system 400 may comprise one or more (aseptic) scraped surface heat exchangers 410.

Fig. 2A schematically depicts a cross-sectional view of the RF heating channel part 530. In embodiments, the flowable food product 1 may be flown through the system channel 210 comprised by the apparatus 1000. In embodiments, the radiofrequency treatment devices 501 may comprise a set of at least two electrodes 560 functionally coupled to the respective RF heating channel part 530. Especially, the radiofrequency treatment devices 501 may be configured to generate RF-waves between a first electrode and a second electrode of the at least two electrodes 560 at a frequency selected from the range of 10-50 MHz, and wherein the radiofrequency treatment device 501 may be configured to generate over the first electrode and the second electrode an oscillating voltage in the range of 100 - 50,000 V.

Fig. 2B schematically depicts an isometric view of the RF heating channel part 530. In embodiments, the radiofrequency treatment devices 501 may comprise a set of at least two electrodes 560 functionally coupled to the respective RF heating channel part 530. Especially, the electrode distance (Lₑ₁) between the mutually most remote electrodes 560 of the at least two electrodes 560 within a set may be selected from the range of 20-200 cm, such as 60-100 cm. Especially, the system channel 210 may comprise tubes 212 having cross-sectional dimensions (d2) selected from the range of 20-100 mm, especially 30-80 mm.

Fig. 3A schematically depicts the temperature of the flowable food product 1 as it is flown through the system channel 210. In embodiments, the apparatus 1000 may comprise a first RF heating channel part 531, a first cooling channel part 541, a second RF heating channel part 532 and a second cooling channel part 542. The flowable food product may be heated in the RF heating channel parts 530 and cooled in the cooling channel parts 540. In embodiments, the RF heating channel part 530 and the cooling channel part 540 may form a set. In further embodiments, the apparatus may comprise one or more sets. In embodiments, the flowable food product may be heated by means of a radiofrequency device via a RF heating channel part 530. In further embodiments, the flowable food product may be cooled by means of the radiofrequency device via the cooling channel part 540. In embodiments, the flowable food product 1 may be heated in the RF heating channel parts 530 to a temperature T_{rf*}. In embodiments, the flowable food product may be cooled to a cooling temperature T_{c*} in the cooling channel parts. In further embodiments, the final radiofrequency treatment temperature T_{rf*} is selected from the range of 90-150°, such as especially 115-135°C.

In further embodiments, the cooling temperature may be selected such that T_{c*}= T_{rf*}-ΔT_{c} wherein the values for ΔT_{c} are individually selected from the range of 0-20°. In embodiments, the apparatus may comprise a temperature holding system 600 configured to maintain the flowable food product 1 in the temperature holding channel part 630 at a holding temperature Tₕ₆. In embodiments, the holding temperature Tₕ₆ is selected from the range of 90-150°C, such as 115-135°C. In yet further embodiments, the apparatus may be configured to maintain the flowable food product in the temperature holding channel part at the holding temperature Tₕ₆ during a heating time period selected from the range of 0.5-10 minutes, such as 3-8 minutes. In embodiments, the holding temperature is selected such that Tₕ₆ ≥ T_{rf*} -10°C. The figure depicts an embodiment of the apparatus comprising of a set of two sets and a temperature holding system 600. The temperature of the flowable food product is shown on the y-axis and time is shown on the x-axis of the graph. Especially, the preheating system 400 may heat the flowable food product to a temperature Tₚₕ. In embodiments, the flowable food product is heated to a temperature T_{rf1} in the first RF heating channel part 531, it is cooled to a temperature T_{c1} in the first cooling channel part 541, it is heated to a temperature T_{rf2} in the second RF heating channel part 532, and it is cooled to a temperature T_{c2} in the second cooling channel part 542. Finally, in this embodiment, the flowable food product 1 is heated to a holding temperature Tₕ₆ in the temperature holding system 600. In embodiments, the cooling system 700 may be configured to cool the flowable food product 1 in the cooling system channel part 740 to a cooling temperature T_{c7}, wherein the cooling temperature T_{c7} may be selected from the range 1-45°C.

Fig. 3B depicts the temperature profile in a cross-section of the system channel. That is, the figure shows the temperature distribution of the flowable food product in a cross-section as it is flowed along the radiofrequency treatment system 500. In the graph, the x-axis shows temperature (T) and the y-axis shows the distance from the bottom of the system channel (D). In embodiments, the flowable food product 1 may have a temperature T_{rfW1} at a wall of first RF heating channel part 531, and a temperature T_{rfW2} at a wall of second RF heating channel part 532. Especially, the first cooling device 511 may be configured to cool the flowable food product 1 in the first cooling channel part 541 to a temperature T_{cW1} at a wall of the first cooling channel part 541. Further, in embodiments, the second cooling device 512 may be configured to cool the flowable food product 1 in the second cooling channel part 542 to a temperature T_{cW2} at a wall of the second cooling channel part 542. Especially, T_{cW2}= T_{rf2}+ΔT_{c} and T_{c1}= T_{rf1}+ΔT_{c}, wherein the values for ΔT_{c} may be individually selected from the range of 0-20°C, such as 5-15 °C. Especially, the first radiofrequency treatment device 501 may be configured to heat the flowable food product 1 to a first radiofrequency treatment temperature T_{rf1} and the second radiofrequency treatment device 502 may be configured to heat the flowable food product 1 to a second radiofrequency treatment temperature T_{rf2}. Especially, T_{rf2}= T_{rf1}-ΔTₕ, wherein the values for ΔTₕ are individually selected from the range of 5-20°C.

The term "plurality" refers to two or more. Furthermore, the terms "a plurality of" and "a number of" may be used interchangeably. The terms "substantially" and "essentially" herein, such as in "substantially consists", will be understood by the person skilled in the art. The terms "substantially" and "essentially may also include embodiments with "entirely", "completely", "all", etc. Hence, in embodiments the adjectives substantially and essentially may also be removed. Where applicable, the terms "substantially" and "essentially" may also relate to 90% or higher, such as 95% or higher, especially 99% or higher, even more especially 99.5% or higher, including 100%. The term "comprise" includes also embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The devices, apparatus, or systems herein are amongst others described during operation. As will be clear to the person skilled in the art, the invention is not limited to methods of operation or devices in operation. The terms "upstream" and "downstream" relate to an arrangement of items or features relative to the propagation of the product in the duct or channel (during operation), wherein relative to a first position within the duct or channel, a second position in the duct or channel closer to an inlet for the product is "upstream", and a third position within the duct or channel further away from the inlet of the product (but closer to an outlet for the heat-treated product) is "downstream". It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim.

Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. An apparatus (1000) for heat treating a flowable food product (1), wherein the apparatus (1000) comprises a channel system (200), a radiofrequency treatment system (500), and a temperature holding system (600), wherein:
- the channel system (200) comprises a system channel (210); wherein the system channel (210) comprises RF heating channel parts (530), one or more cooling channel parts (540), and a temperature holding channel part (630);
- the radiofrequency treatment system (500) comprises an arrangement wherein at least a first RF heating channel part (531) is configured upstream of a first cooling channel part (541), and wherein the first cooling channel part (541) is configured upstream of a second RF heating channel part (532); wherein the radiofrequency treatment system (500) is configured to (a) provide radiofrequency waves to the flowable food product (1) in the RF heating channel parts (530) and (b) cool the flowable food product (1) in the one or more cooling channel parts (540), according to a temperature distribution wherein a temperature of the flowable food product (1) in a cooling channel part (540) downstream of a RF heating channel part (530) is lower than the temperature of the flowable food product (1) in the RF heating channel part (530) configured upstream of that cooling channel part (540), and wherein a temperature of the flowable food product (1) in a RF heating channel part (530) configured downstream of a set of a RF heating channel part (530) and a cooling channel part (540) is higher than that of the flowable food product (1) in the RF heating channel part (530) of that set;
- the temperature holding system (600) is configured downstream of the radiofrequency treatment system (500) and is configured to maintain the flowable food product (1) in the temperature holding channel part (630) at a holding temperature Tₕ₆.

2. The apparatus (1000) according to claim 1, further comprising a pump system (50), wherein the pump system (50) is configured to flow the flowable food product (1) with an average flow velocity of at least 0.25 m/s through the system channel (210), wherein the holding temperature Tₕ₆ is selected from the range of 90-150°C, and wherein the apparatus (1000) is configured to maintain the flowable food product (1) in the temperature holding channel part (630) at the holding temperature Tₕ₆ during a heating time period selected from the range of 0.5-10 minutes.

3. The apparatus (1000) according to any one of the preceding claims, wherein the radiofrequency treatment system (500) is configured to heat the flowable food product (1) to a final radiofrequency treatment temperature T_{rf*}, wherein the final radiofrequency treatment temperature T_{rf*} is selected from the range of 90-150°C, wherein Tₕ₆ ≥ T_{rf*} -10°C.

4. The apparatus (1000) according to any one of the preceding claims, wherein:
- the RF heating channel parts (530) comprises the first RF heating channel part (531), the second RF heating channel part (532), and a third RF heating channel part (533);
- the one or more cooling channel parts (540) comprises the first cooling channel part (541), and a second cooling channel part (542), wherein the first cooling channel part (541) is configured downstream of the first RF heating channel part (531) and upstream of the second RF heating channel part (532), and wherein the second cooling channel part (542) is configured downstream of the second RF heating channel part (532) and upstream of the third RF heating channel part (533);
- the radiofrequency treatment system (500) comprises (i) a first radiofrequency treatment device (501) configured to provide radiofrequency waves to the flowable food product (1) in the first RF heating channel part (531); (ii) a second radiofrequency treatment device (502) configured to provide radiofrequency waves to the flowable food product (1) in the second RF heating channel part (532); (iii) a third radiofrequency treatment device (503) configured to provide radiofrequency waves to the flowable food product (1) in the third RF heating channel part (533), wherein the first radiofrequency treatment device (501) is configured to heat the flowable food product (1) in the first RF heating channel part (531) to a first radiofrequency treatment temperature T_{rf1}; wherein the second radiofrequency treatment device (502) is configured to heat the flowable food product (1) in the second RF heating channel part (532) to a second radiofrequency treatment temperature T_{rf2}; and wherein the third radiofrequency treatment device (503) is configured to heat the flowable food product (1) in the third RF heating channel part (533) to a third radiofrequency treatment temperature T_{rf3}; wherein T_{rf3}= T_{rf2}+ΔTₕ, and T_{rf2}= T_{rf1}+ΔTₕ, wherein the values for ΔTₕ are individually selected from the range of 5-20°C.

5. The apparatus (1000) according to claim 4, wherein each of the radiofrequency treatment devices (501,502,503) is configured to generate RF-waves between a first electrode and a second electrode of the at least two electrodes (560) at a frequency selected from the range of 10-50 MHz, and wherein each of the radiofrequency treatment devices (501,502,503) is configured to generate over the first electrode and the second electrode an oscillating voltage in the range of 100 - 50,000 V.

6. The apparatus (1000) according to any one of the preceding claims 4-5, wherein the radiofrequency treatment system (500) comprises a first cooling device (511) and a second cooling device (512); wherein the flowable food product (1) has a temperature T_{rfW1} at a wall of first RF heating channel part (531), wherein the flowable food product (1) has a temperature T_{rfW2} at a wall of second RF heating channel part (532), wherein (i) the first cooling device (511) is configured to cool the flowable food product (1) in the first cooling channel part (541) to a temperature T_{cW1} at a wall of the first cooling channel part (541), and wherein (ii) the second cooling device (512) is configured to cool the flowable food product (1) in the second cooling channel part (542) to a temperature T_{cW2} at a wall of the second cooling channel part (542), wherein T_{cW2}= T_{rf2}+ΔT_{c} and T_{c1}= T_{rf1}+ΔT_{c}, wherein the values for ΔT_{c} are individually selected from the range of 0-20°C.

7. The apparatus (1000) according to any one of the preceding claims, comprising n sets of each an RF heating channel part (530) and a cooling channel part (540) configured downstream of the RF heating channel parts (530) comprised by the set, wherein n is selected from the range of 4-10.

8. The apparatus (1000) according to any one of the preceding claims, further comprising a cooling system (700), configured downstream of the temperature holding system (600), wherein the system channel (210) comprises a cooling system channel part (740), wherein the cooling system (700) is configured to cool the flowable food product (1) in the cooling system channel part (740) to a cooling temperature T_{c7}, wherein the cooling temperature T_{c7} is selected from the range 1-45°C, and wherein the cooling system (700) comprises one or more aseptic scraped surface heat exchangers (710).

9. The apparatus (1000) according to any one of the preceding claims, wherein the apparatus (1000) comprises a cooking system (100), wherein the cooking system (100) is configured to generate a flowable food product (1) having a viscosity selected from the range of 2-10000 mPa·s at ambient conditions.

10. A method for heat treating a flowable food product (1) using an apparatus (1000) described in any one of the preceding claims, the method comprising:
- providing radiofrequency waves to the flowable food product (1) in the RF heating channel parts (530);
- cooling the flowable food product (1) in the one or more cooling channel parts (540), according to a temperature distribution wherein a temperature of the flowable food product (1) in a cooling channel part (540) downstream of a RF heating channel part (530) is lower than the temperature of the flowable food product (1) in the RF heating channel part (530) configured upstream of that cooling channel part (540), and wherein a temperature of the flowable food product (1) in a RF heating channel part (530) configured downstream of a set of a RF heating channel part (530) and a cooling channel part (540) is higher than that of the flowable food product (1) in the RF heating channel part (530) of that set; and
- maintaining the flowable food product (1) in the temperature holding channel part (630) at a holding temperature Tₕ₆.

11. The method according to claim 10, comprising one or more of
- flowing the flowable food product (1) with an average flow velocity of at least 0.25 m/s through the system channel (210);
- selecting the holding temperature Tₕ₆ from the range of 90-150°C;
- maintaining the flowable food product (1) in the temperature holding channel part (630) at the holding temperature Tₕ₆ during a heating time period selected from the range of 0.5-10 minutes;
- heating the flowable food product (1) to a final radiofrequency treatment temperature T_{rf*}, wherein the final radiofrequency treatment temperature T_{rf*} is selected from the range of 90-150°C, wherein Tₕ₆ ≥ T_{rf*} -10°C.

12. The method according to any one of the preceding claims 10-11, comprising providing radiofrequency waves to the flowable food product (1): in the first RF heating channel part (531), in the second RF heating channel part (532), and in the third RF heating channel part (533), wherein the method comprises
- generating RF-waves between a first electrode and a second electrode of the at least two electrodes (560) at a frequency selected from the range of 10-50 MHz; and
- generating over the first electrode and the second electrode an oscillating voltage in the range of 100 - 50,000 V.

13. The method according to claim 12, comprising
- heating the flowable food product (1) in the first RF heating channel part (531) to a first radiofrequency treatment temperature T_{rf1};
- heating the flowable food product (1) in the second RF heating channel part (532) to a second radiofrequency treatment temperature T_{rf2}; and
- heating the flowable food product (1) in the third RF heating channel part (533) to a third radiofrequency treatment temperature T_{rf3};
wherein T_{rf3}= T_{rf2}+ΔTₕ, and T_{rf2}= T_{rf1}+ΔTₕ, wherein the values for ΔTₕ are individually selected from the range of 5-20°C.

14. The method according to any one of the preceding claims 12-13, comprising:
- cooling the flowable food product (1) in the first cooling channel part (541) to a temperature T_{cW1} at a wall of the first cooling channel part (541), and
- cooling the flowable food product (1) in the second cooling channel part (542) to a temperature T_{cW2} at a wall of the second cooling channel part (542), wherein T_{cW2}= T_{rf2}+ΔT_{c} and T_{c1}= T_{rf1}+ΔT_{c}, wherein the values for ΔT_{c} are individually selected from the range of 0-20°C; and
- cooling the flowable food product (1) in the cooling system channel part (740) to a cooling temperature T_{c7}, wherein the cooling temperature T_{c7} is selected from the range 1-45°C.

15. The method according to any one of the preceding claims 10-14, comprising generating a flowable food product (1) having a viscosity selected from the range of 2-10000 mPa·s at ambient conditions; and wherein (i) the flowable food product (1) comprises food particles (2) having one or more dimensions selected from the range of 0.1*d2-0.5*d2; wherein the system channel (210) has a diameter (d2) selected from the range 25-80 mm and/or (ii) the flowable food product (1) comprises a soup or a sauce or baby food, wherein the flowable food product comprises solid food particles.

## Patentansprüche

1. Vorrichtung (1000) zum Wärmebehandeln eines fließfähigen Lebensmittelprodukts (1), wobei die Vorrichtung (1000) ein Kanalsystem (200), ein Hochfrequenzbehandlungssystem (500) und ein Temperaturhaltesystem (600) umfasst, wobei:
- das Kanalsystem (200) einen Systemkanal (210) umfasst; wobei der Systemkanal (210) HF-Heizkanalteile (530), mindestens einen Kühlkanalteil (540) und einen Temperaturhaltekanalteil (630) umfasst;
- das Hochfrequenzbehandlungssystem (500) eine Anordnung umfasst, wobei mindestens ein erster HF-Heizkanalteil (531) stromaufwärts eines ersten Kühlkanalteils (541) eingerichtet ist und wobei der erste Kühlkanalteil (541) stromaufwärts eines zweiten HF-Heizkanalteils (532) eingerichtet ist; wobei das Hochfrequenzbehandlungssystem (500) eingerichtet ist, um (a) dem fließfähigen Lebensmittelprodukt (1) Hochfrequenzwellen in den HF-Heizkanalteilen (530) bereitzustellen und (b) das fließfähige Lebensmittelprodukt (1) in dem mindestens einen Kühlkanalteil (540) gemäß einer Temperaturverteilung zu kühlen, wobei eine Temperatur des fließfähigen Lebensmittelprodukts (1) in einem Kühlkanalteil (540) stromabwärts eines HF-Heizkanalteils (530) niedriger ist als die Temperatur des fließfähigen Lebensmittelprodukts (1) in dem HF-Heizkanalteil (530), der stromaufwärts dieses Kühlkanalteils (540) eingerichtet ist, und wobei eine Temperatur des fließfähigen Lebensmittelprodukts (1) in einem HF-Heizkanalteil (530), der stromabwärts eines Satzes eines HF-Heizkanalteils (530) und eines Kühlkanalteils (540) eingerichtet ist, höher ist als die des fließfähigen Lebensmittelprodukts (1) in dem HF-Heizkanalteil (530) dieses Satzes;
- das Temperaturhaltesystem (600) stromabwärts des Hochfrequenzbehandlungssystems (500) eingerichtet ist und eingerichtet ist, um das fließfähige Lebensmittelprodukt (1) in dem Temperaturhaltekanalteil (630) auf einer Haltetemperatur Tₕ₆ zu halten.

2. Vorrichtung (1000) nach Anspruch 1, weiterhin umfassend ein Pumpensystem (50), wobei das Pumpensystem (50) eingerichtet ist, um das fließfähige Lebensmittelprodukt (1) mit einer durchschnittlichen Fließgeschwindigkeit von mindestens 0,25 m/s durch den Systemkanal (210) fließen zu lassen, wobei die Haltetemperatur Tₕ₆ aus dem Bereich von 90 bis 150 °C ausgewählt ist und wobei die Vorrichtung (1000) eingerichtet ist, um das fließfähige Lebensmittelprodukt (1) in dem Temperaturhaltekanalteil (630) während einer Heizzeitdauer, die aus dem Bereich von 0,5 bis 10 Minuten ausgewählt ist, auf der Haltetemperatur Tₕ₆ zu halten.

3. Vorrichtung (1000) nach einem der vorhergehenden Ansprüche, wobei das Hochfrequenzbehandlungssystem (500) eingerichtet ist, um das fließfähige Lebensmittelprodukt (1) auf eine abschließende Hochfrequenzbehandlungstemperatur T_{rf*} zu erwärmen, wobei die abschließende Hochfrequenzbehandlungstemperatur T_{rf*} aus dem Bereich von 90 bis 150 °C ausgewählt ist, wobei Tₕ₆ ≥ T_{rf*} - 10 °C ist.

4. Vorrichtung (1000) nach einem der vorhergehenden Ansprüche, wobei:
- die HF-Heizkanalteile (530) den ersten HF-Heizkanalteil (531), den zweiten HF-Heizkanalteil (532) und einen dritten HF-Heizkanalteil (533) umfassen;
- der mindestens eine Kühlkanalteil (540) den ersten Kühlkanalteil (541) und einen zweiten Kühlkanalteil (542) umfasst, wobei der erste Kühlkanalteil (541) stromabwärts des ersten HF-Heizkanalteils (531) und stromaufwärts des zweiten HF-Heizkanalteils (532) eingerichtet ist und wobei der zweite Kühlkanalteil (542) stromabwärts des zweiten HF-Heizkanalteils (532) und stromaufwärts des dritten HF-Heizkanalteils (533) eingerichtet ist;
- das Hochfrequenzbehandlungssystem (500) (i) eine erste Hochfrequenzbehandlungsvorrichtung (501), die eingerichtet ist, um dem fließfähigen Lebensmittelprodukt (1) Hochfrequenzwellen in dem ersten HF-Heizkanalteil (531) bereitzustellen; (ii) eine zweite Hochfrequenzbehandlungsvorrichtung (502), die eingerichtet ist, um dem fließfähigen Lebensmittelprodukt (1) Hochfrequenzwellen in dem zweiten HF-Heizkanalteil (532) bereitzustellen; (iii) eine dritte Hochfrequenzbehandlungsvorrichtung (503) umfasst, die eingerichtet ist, um dem fließfähigen Lebensmittelprodukt (1) Hochfrequenzwellen in dem dritten HF-Heizkanalteil (533) bereitzustellen, wobei die erste Hochfrequenzbehandlungsvorrichtung (501) eingerichtet ist, um das fließfähige Lebensmittelprodukt (1) in dem ersten HF-Heizkanalteil (531) auf eine erste Hochfrequenzbehandlungstemperatur T_{rf1} zu erwärmen; wobei die zweite Hochfrequenzbehandlungsvorrichtung (502) eingerichtet ist, um das fließfähige Lebensmittelprodukt (1) in dem zweiten HF-Heizkanalteil (532) auf eine zweite Hochfrequenzbehandlungstemperatur T_{rf2} zu erwärmen; und
wobei die dritte Hochfrequenzbehandlungsvorrichtung (503) eingerichtet ist, um das fließfähige Lebensmittelprodukt (1) in dem dritten HF-Heizkanalteil (533) auf eine dritte Hochfrequenzbehandlungstemperatur T_{rf3} zu erwärmen; wobei T_{rf3} = T_{rf2} + ΔTₕ und T_{rf2} = T_{rf1} + ΔTₕ ist, wobei die Werte für ΔTₕ individuell aus dem Bereich von 5 bis 20 °C ausgewählt sind.

5. Vorrichtung (1000) nach Anspruch 4, wobei jede der Hochfrequenzbehandlungsvorrichtungen (501, 502, 503) eingerichtet ist, HF-Wellen zwischen einer ersten Elektrode und einer zweiten Elektrode der mindestens zwei Elektroden (560) mit einer Frequenz zu erzeugen, die aus dem Bereich von 10 bis 50 MHz ausgewählt ist, und wobei jede der Hochfrequenzbehandlungsvorrichtungen (501, 502, 503) eingerichtet ist, über die erste Elektrode und die zweite Elektrode eine oszillierende Spannung im Bereich von 100 bis 50.000 V zu erzeugen.

6. Vorrichtung (1000) nach einem der vorhergehenden Ansprüche 4 bis 5, wobei das Hochfrequenzbehandlungssystem (500) eine erste Kühlvorrichtung (511) und eine zweite Kühlvorrichtung (512) umfasst; wobei das fließfähige Lebensmittelprodukt (1) eine Temperatur T_{rfW1} an einer Wand des ersten HF-Heizkanalteils (531) aufweist, wobei das fließfähige Lebensmittelprodukt (1) eine Temperatur T_{rfW2} an einer Wand des zweiten HF-Heizkanalteils (532) aufweist, wobei (i) die erste Kühlvorrichtung (511) eingerichtet ist, um das fließfähige Lebensmittelprodukt (1) in dem ersten Kühlkanalteil (541) auf eine Temperatur T_{cW1} an einer Wand des ersten Kühlkanalteils (541) zu kühlen, und wobei (ii) die zweite Kühlvorrichtung (512) eingerichtet ist, um das fließfähige Lebensmittelprodukt (1) in dem zweiten Kühlkanalteil (542) auf eine Temperatur T_{cW2} an einer Wand des zweiten Kühlkanalteils (542) zu kühlen, wobei T_{cW2} = T_{rf2} + ΔT_{c} und T_{c1} = T_{rf1} + ΔT_{c} ist, wobei die Werte für ΔT_{c} individuell aus dem Bereich von 0 bis 20 °C ausgewählt sind.

7. Vorrichtung (1000) nach einem der vorhergehenden Ansprüche, umfassend n Sätze von jeweils einem HF-Heizkanalteil (530) und einem Kühlkanalteil (540), der stromabwärts der HF-Heizkanalteile (530) eingerichtet ist, die in dem Satz enthalten sind, wobei n aus dem Bereich von 4 bis 10 ausgewählt ist.

8. Vorrichtung (1000) nach einem der vorhergehenden Ansprüche, weiterhin umfassend ein Kühlsystem (700), das stromabwärts des Temperaturhaltesystems (600) eingerichtet ist, wobei der Systemkanal (210) einen Kühlsystemkanalteil (740) umfasst, wobei das Kühlsystem (700) eingerichtet ist, um das fließfähige Lebensmittelprodukt (1) in dem Kühlsystemkanalteil (740) auf eine Kühltemperatur T_{c7} zu kühlen, wobei die Kühltemperatur T_{c7} aus dem Bereich von 1 bis 45 °C ausgewählt ist und wobei das Kühlsystem (700) mindestens einen Wärmetauscher mit aseptisch geschabter Oberfläche (710) umfasst.

9. Vorrichtung (1000) nach einem der vorhergehenden Ansprüche, wobei die Vorrichtung (1000) ein Kochsystem (100) umfasst, wobei das Kochsystem (100) eingerichtet ist, um ein fließfähiges Lebensmittelprodukt (1) mit einer Viskosität zu erzeugen, die aus dem Bereich von 2 bis 10000 mPa·s bei Umgebungsbedingungen ausgewählt ist.

10. Verfahren zum Wärmebehandeln eines fließfähigen Lebensmittelprodukts (1) unter Verwendung einer Vorrichtung (1000), die in einem der vorhergehenden Ansprüche beschrieben ist, das Verfahren Folgendes umfassend:
- Bereitstellen von Hochfrequenzwellen an dem fließfähigen Lebensmittelprodukt (1) in den HF-Heizkanalteilen (530);
- Kühlen des fließfähigen Lebensmittelprodukts (1) in dem mindestens einen Kühlkanalteil (540) gemäß einer Temperaturverteilung, wobei eine Temperatur des fließfähigen Lebensmittelprodukts (1) in einem Kühlkanalteil (540) stromabwärts eines HF-Heizkanalteils (530) niedriger ist als die Temperatur des fließfähigen Lebensmittelprodukts (1) in dem HF-Heizkanalteil (530), der stromaufwärts dieses Kühlkanalteils (540) eingerichtet ist, und wobei eine Temperatur des fließfähigen Lebensmittelprodukts (1) in einem HF-Heizkanalteil (530), der stromabwärts eines Satzes eines HF-Heizkanalteils (530) und eines Kühlkanalteils (540) eingerichtet ist, höher ist als die des fließfähigen Lebensmittelprodukts (1) im HF-Heizkanalteil (530) dieses Satzes; und
- Halten des fließfähigen Lebensmittelprodukts (1) in dem Temperaturhaltekanalteil (630) auf einer Haltetemperatur Tₕ₆.

11. Verfahren nach Anspruch 10, umfassend mindestens eines des Folgenden
- Fließenlassen des fließfähigen Lebensmittelprodukts (1) mit einer durchschnittlichen Fließgeschwindigkeit von mindestens 0,25 m/s durch den Systemkanal (210);
- Auswählen der Haltetemperatur Tₕ₆ aus dem Bereich von 90 bis 150 °C;
- Halten des fließfähigen Lebensmittelprodukts (1) in dem Temperaturhaltekanalteil (630) auf der Haltetemperatur Tₕ₆ während einer Heizzeitdauer, die aus dem Bereich von 0,5 bis 10 Minuten ausgewählt ist;
- Erwärmen des fließfähigen Lebensmittelprodukts (1) auf eine abschließende Hochfrequenzbehandlungstemperatur T_{rf*}, wobei die abschließende Hochfrequenzbehandlungstemperatur T_{rf*} aus dem Bereich von 90 bis 150 °C ausgewählt ist, wobei Tₕ₆ ≥ _{Trf*} - 10 °C ist.

12. Verfahren nach einem der vorhergehenden Ansprüche 10 bis 11, umfassend Bereitstellen von Hochfrequenzwellen an dem fließfähigen Lebensmittelprodukt (1) in dem ersten HF-Heizkanalteil (531), in dem zweiten HF-Heizkanalteil (532) und in dem dritten HF-Heizkanalteil (533), wobei das Verfahren Folgendes umfasst
- Erzeugen von HF-Wellen zwischen einer ersten Elektrode und einer zweiten Elektrode der mindestens zwei Elektroden (560) mit einer Frequenz, die aus dem Bereich von 10 bis 50 MHz ausgewählt ist; und
- Erzeugen, über die erste Elektrode und die zweite Elektrode, einer oszillierenden Spannung im Bereich von 100 bis 50.000 V.

13. Verfahren nach Anspruch 12, Folgendes umfassend
- Erwärmen des fließfähigen Lebensmittelprodukts (1) in dem ersten HF-Heizkanalteil (531) auf eine erste Hochfrequenzbehandlungstemperatur T_{rf1};
- Erwärmen des fließfähigen Lebensmittelprodukts (1) in dem zweiten HF-Heizkanalteil (532) auf eine zweite Hochfrequenzbehandlungstemperatur T_{rf2}; und
- Erwärmen des fließfähigen Lebensmittelprodukts (1) in dem dritten HF-Heizkanalteil (533) auf eine dritte Hochfrequenzbehandlungstemperatur T_{rf3};
wobei T_{rf3} = T_{rf2} + ΔTₕ und T_{rf2} = T_{rf1} + ΔTₕ, wobei die Werte für ΔTₕ individuell aus dem Bereich von 5 bis 20 °C ausgewählt sind.

14. Verfahren nach einem der vorhergehenden Ansprüche 12 bis 13, das weiterhin Folgendes umfasst:
- Kühlen des fließfähigen Lebensmittelprodukts (1) in dem ersten Kühlkanalteil (541) auf eine Temperatur T_{cW1} an einer Wand des ersten Kühlkanalteils (541) und
- Kühlen des fließfähigen Lebensmittelprodukts (1) in dem zweiten Kühlkanalteil (542) auf eine Temperatur T_{cW2} an einer Wand des zweiten Kühlkanalteils (542), wobei T_{cW2} = T_{rf2} + ΔT_{c} und T_{c1} = T_{rf1} + ΔT_{c} ist, wobei die Werte für ΔT_{c} individuell aus dem Bereich von 0 bis 20 °C ausgewählt sind; und
- Kühlen des fließfähigen Lebensmittelprodukts (1) in dem Kühlsystemkanalteil (740) auf eine Kühltemperatur T_{c7}, wobei die Kühltemperatur T_{c7} aus dem Bereich von 1 bis 45 °C ausgewählt ist.

15. Verfahren nach einem der vorhergehenden Ansprüche 10 bis 14, umfassend Erzeugen eines fließfähigen Lebensmittelprodukts (1) mit einer Viskosität, ausgewählt aus dem Bereich von 2 bis 10000 mPa·s bei Umgebungsbedingungen; und wobei (i) das fließfähige Lebensmittelprodukt (1) Lebensmittelpartikel (2) mit mindestens einer Abmessung umfasst, die aus dem Bereich von 0,1* d2 bis 0,5*d2 ausgewählt ist; wobei der Systemkanal (210) einen Durchmesser (d2) aufweist, der aus dem Bereich von 25 bis 80 mm ausgewählt ist, und/oder (ii) das fließfähige Lebensmittelprodukt (1) eine Suppe oder eine Soße oder Babynahrung umfasst, wobei das fließfähige Lebensmittelprodukt feste Lebensmittelpartikel enthält.

## Revendications

1. Appareil (1000) destiné à traiter thermiquement un produit alimentaire fluide (1), l'appareil (1000) comprenant un système de canal (200), un système de traitement radiofréquence (500) et un système de maintien en température (600), dans lequel :
- le système de canal (200) comprend un canal de système (210), le canal de système (210) comprenant des parties de canal de chauffage RF (530), une ou plusieurs parties de canal de refroidissement (540) et une partie de canal de maintien en température (630) ;
- le système de traitement radiofréquence (500) comprend un agencement dans lequel au moins une première partie de canal de chauffage RF (531) est configurée en amont d'une première partie de canal de refroidissement (541), et dans lequel la première partie de canal de refroidissement (541) est configurée en amont d'une deuxième partie de canal de chauffage RF (532) ; le système de traitement radiofréquence (500) étant configuré pour (a) appliquer des ondes radiofréquence au produit alimentaire fluide (1) dans les parties de canal de chauffage RF (530) et (b) refroidir le produit alimentaire fluide (1) dans la ou les parties de canal de refroidissement (540), en fonction d'une distribution de température selon laquelle une température du produit alimentaire fluide (1) dans une partie de canal de refroidissement (540) en aval d'une partie de canal de chauffage RF (530) est inférieure à la température du produit alimentaire fluide (1) dans la partie de canal de chauffage RF (530) configurée en amont de cette partie de canal de refroidissement (540), et selon laquelle une température du produit alimentaire fluide (1) dans une partie de canal de chauffage RF (530) configurée en aval d'un ensemble d'une partie de canal de chauffage RF (530) et d'une partie de canal de refroidissement (540) est supérieure à celle du produit alimentaire fluide (1) dans la partie de canal de chauffage RF (530) de cet ensemble ;
- le système de maintien en température (600) est configuré en aval du système de traitement radiofréquence (500) et est configuré pour maintenir le produit alimentaire fluide (1) dans la partie de canal de maintien en température (630) à une température de maintien Tₕ₆.

2. Appareil (1000) selon la revendication 1, comprenant en outre un système de pompe (50), le système de pompe (50) étant configuré pour faire s'écouler le produit alimentaire fluide (1) à une vitesse moyenne d'écoulement d'au moins 0,25 m/s à travers le canal de système (210), la température de maintien Tₕ₆ étant sélectionnée dans la plage de 90-150 °C, et l'appareil (1000) étant configuré pour maintenir le produit alimentaire fluide (1) dans la partie de canal de maintien en température (630) à la température de maintien Tₕ₆ pendant une durée de chauffage sélectionnée dans la plage de 0,5-10 minutes.

3. Appareil (1000) selon l'une quelconque des revendications précédentes, dans lequel le système de traitement radiofréquence (500) est configuré pour chauffer le produit alimentaire fluide (1) jusqu'à une température de traitement radiofréquence finale T_{rf*}, la température de traitement radiofréquence finale T_{rf*} étant sélectionnée dans la plage de 90-150 °C, avec Tₕ₆ ≥ T_{rf*} - 10 °C.

4. Appareil (1000) selon l'une quelconque des revendications précédentes, dans lequel :
- les parties de canal de chauffage RF (530) comprennent la première partie de canal de chauffage RF (531), la deuxième partie de canal de chauffage RF (532) et une troisième partie de canal de chauffage RF (533) ;
- la ou les parties de canal de refroidissement (540) comprennent la première partie de canal de refroidissement (541) et une deuxième partie de canal de refroidissement (542), la première partie de canal de refroidissement (541) étant configurée en aval de la première partie de canal de chauffage RF (531) et en amont de la deuxième partie de canal de chauffage RF (532), et la deuxième partie de canal de refroidissement (542) étant configurée en aval de la deuxième partie de canal de chauffage RF (532) et en amont de la troisième partie de canal de chauffage RF (533) ;
- le système de traitement radiofréquence (500) comprend (i) un premier dispositif de traitement radiofréquence (501) configuré pour appliquer des ondes radiofréquence au produit alimentaire fluide (1) dans la première partie de canal de chauffage RF (531) ; (ii) un deuxième dispositif de traitement radiofréquence (502) configuré pour appliquer des ondes radiofréquence au produit alimentaire fluide (1) dans la deuxième partie de canal de chauffage RF (532) ; (iii) un troisième dispositif de traitement radiofréquence (503) configuré pour appliquer des ondes radiofréquence au produit alimentaire fluide (1) dans la troisième partie de canal de chauffage RF (533), dans lequel le premier dispositif de traitement radiofréquence (501) est configuré pour chauffer le produit alimentaire fluide (1) dans la première partie de canal de chauffage RF (531) jusqu'à une première température de traitement radiofréquence T_{rf1} ; dans lequel le deuxième dispositif de traitement radiofréquence (502) est configuré pour chauffer le produit alimentaire fluide (1) dans la deuxième partie de canal de chauffage RF (532) jusqu'à une deuxième température de traitement radiofréquence T_{rf2} ; et dans lequel le troisième dispositif de traitement radiofréquence (503) est configuré pour chauffer le produit alimentaire fluide (1) dans la troisième partie de canal de chauffage RF (533) jusqu'à une troisième température de traitement radiofréquence T_{rf3} ; dans lequel T_{rf3} = T_{rf2}+ΔTₙ, et T_{rf2} = T_{rf1}+ΔTₕ, les valeurs pour ΔTₕ étant individuellement sélectionnées dans la plage de 5-20 °C.

5. Appareil (1000) selon la revendication 4, dans lequel chacun des dispositifs de traitement radiofréquence (501, 502, 503) est configuré pour générer des ondes RF entre une première électrode et une deuxième électrode parmi les au moins deux électrodes (560) à une fréquence sélectionnée dans la plage de 10-50 MHz, et dans lequel chacun des dispositifs de traitement radiofréquence (501, 502, 503) est configuré pour générer sur la première électrode et la deuxième électrode une tension oscillante dans la plage de 100 - 50 000 V.

6. Appareil (1000) selon l'une quelconque des revendications 4 et 5 précédentes, dans lequel le système de traitement radiofréquence (500) comprend un premier dispositif de refroidissement (511) et un deuxième dispositif de refroidissement (512) ; dans lequel le produit alimentaire fluide (1) possède une température T_{rfw1} au niveau d'une paroi de la première partie de canal de chauffage RF (531), dans lequel le produit alimentaire fluide (1) possède une température T_{rfW2} au niveau d'une paroi de la deuxième partie de canal de chauffage RF (532), dans lequel (i) le premier dispositif de refroidissement (511) est configuré pour refroidir le produit alimentaire fluide (1) dans la première partie de canal de refroidissement (541) jusqu'à une température T_{cW1} au niveau d'une paroi de la première partie de canal de refroidissement (541), et dans lequel (ii) le deuxième dispositif de refroidissement (512) est configuré pour refroidir le produit alimentaire fluide (1) dans la deuxième partie de canal de refroidissement (542) jusqu'à une température T_{cW2} au niveau d'une paroi de la deuxième partie de canal de refroidissement (542), dans lequel T_{cW2} = T_{rf2}+ΔT_{c} et T_{c1} = T_{rf1}+ΔT_{c}, les valeurs pour ΔT_{c} étant individuellement sélectionnées dans la plage de 0-20 °C.

7. Appareil (1000) selon l'une quelconque des revendications précédentes, comprenant n ensembles, chacun d'une partie de canal de chauffage RF (530) et d'une partie de canal de refroidissement (540) configurée en aval des parties de canal de chauffage RF (530) comprises dans l'ensemble, n étant sélectionné dans la plage de 4-10.

8. Appareil (1000) selon l'une quelconque des revendications précédentes, comprenant en outre un système de refroidissement (700) configuré en aval du système de maintien en température (600), le canal de système (210) comprenant une partie de canal de système de refroidissement (740), le système de refroidissement (700) étant configuré pour refroidir le produit alimentaire fluide (1) dans la partie de canal de système de refroidissement (740) jusqu'à une température de refroidissement T_{c7}, la température de refroidissement T_{c7} étant sélectionnée dans la plage de 1-45 °C, et le système de refroidissement (700) comprenant un ou plusieurs échangeurs de chaleurs à surface raclée aseptique (710).

9. Appareil (1000) selon l'une quelconque des revendications précédentes, l'appareil (1000) comprenant un système de cuisson (100), le système de cuisson (100) étant configuré pour produire un produit alimentaire fluide (1) ayant une viscosité sélectionnée dans la plage de 2-10 000 mPa·s dans des conditions ambiantes.

10. Procédé destiné à traiter thermiquement un produit alimentaire fluide (1) au moyen d'un appareil (1000) décrit dans l'une quelconque des revendications précédentes, le procédé comprenant :
- l'application d'ondes radiofréquence au produit alimentaire fluide (1) dans les parties de canal de chauffage RF (530) ;
- le refroidissement du produit alimentaire fluide (1) dans la ou les parties de canal de refroidissement (540), en fonction d'une distribution de température selon laquelle une température du produit alimentaire fluide (1) dans une partie de canal de refroidissement (540) en aval d'une partie de canal de chauffage RF (530) est inférieure à la température du produit alimentaire fluide (1) dans la partie de canal de chauffage RF (530) configurée en amont de cette partie de canal de refroidissement (540), et selon laquelle une température du produit alimentaire fluide (1) dans une partie de canal de chauffage RF (530) configurée en aval d'un ensemble d'une partie de canal de chauffage RF (530) et d'une partie de canal de refroidissement (540) est supérieure à celle du produit alimentaire fluide (1) dans la partie de canal de chauffage RF (530) de cet ensemble ; et
- le maintien du produit alimentaire fluide (1) dans la partie de canal de maintien en température (630) à une température de maintien Tₕ₆.

11. Procédé selon la revendication 10, comprenant une ou plusieurs des étapes suivantes :
- écoulement du produit alimentaire fluide (1) à une vitesse moyenne d'écoulement d'au moins 0,25 m/s à travers le canal de système (210) ;
- sélection de la température de maintien Tₕ₆ dans la plage de 90-150 °C ;
- maintien du produit alimentaire fluide (1) dans la partie de canal de maintien en température (630) à la température de maintien Tₕ₆ pendant une durée de chauffage sélectionnée dans la plage de 0,5-10 minutes ;
- chauffage du produit alimentaire fluide (1) jusqu'à une température de traitement radiofréquence finale T_{rf*}, la température de traitement radiofréquence finale T_{rf*} étant sélectionnée dans la plage de 90-150 °C, avec Tₕ₆ ≥ T_{rf*} - 10 °C.

12. Procédé selon l'une quelconque des revendications 10 et 11 précédentes, comprenant l'application d'ondes radiofréquence au produit alimentaire fluide (1) : dans la première partie de canal de chauffage RF (531), dans la deuxième partie de canal de chauffage RF (532) et dans la troisième partie de canal de chauffage RF (533), le procédé comprenant
- la génération d'ondes RF entre une première électrode et une deuxième électrode parmi les au moins deux électrodes (560) à une fréquence sélectionnée dans la plage de 10-50 MHz ; et
- la génération sur la première électrode et la deuxième électrode d'une tension oscillante dans la plage de 100 - 50 000 V.

13. Procédé selon la revendication 12, comprenant
- le chauffage du produit alimentaire fluide (1) dans la première partie de canal de chauffage RF (531) jusqu'à une première température de traitement radiofréquence T_{rf1} ;
- le chauffage du produit alimentaire fluide (1) dans la deuxième partie de canal de chauffage RF (532) jusqu'à une deuxième température de traitement radiofréquence T_{rf2} ; et
- le chauffage du produit alimentaire fluide (1) dans la troisième partie de canal de chauffage RF (533) jusqu'à une troisième température de traitement radiofréquence T_{rf3} ;
dans lequel T_{rf3} = T_{rf2}+ΔTₕ, et T_{rf2} = T_{rf1}+ΔTₙ, les valeurs pour ΔTₕ étant individuellement sélectionnées dans la plage de 5-20 °C.

14. Procédé selon l'une quelconque des revendications 12 et 13 précédentes, comprenant :
- le refroidissement du produit alimentaire fluide (1) dans la première partie de canal de refroidissement (541) jusqu'à une température T_{cW1} au niveau d'une paroi de la première partie de canal de refroidissement (541), et
- le refroidissement du produit alimentaire fluide (1) dans la deuxième partie de canal de refroidissement (542) jusqu'à une température T_{cW2} au niveau d'une paroi de la deuxième partie de canal de refroidissement (542), avec T_{cW2} = T_{rf2}+ΔT_{c} et T_{c1} = T_{rf1}+ΔT_{c}, les valeurs pour ΔT_{c} étant individuellement sélectionnées dans la plage de 0-20 °C ; et
- le refroidissement du produit alimentaire fluide (1) dans la partie de canal de système de refroidissement (740) jusqu'à une température de refroidissement T_{c7}, la température de refroidissement T_{c7} étant sélectionnée dans la plage de 1-45 °C.

15. Procédé selon l'une quelconque des revendications 10 à 14 précédentes, comprenant la production d'un produit alimentaire fluide (1) ayant une viscosité sélectionnée dans la plage de 2-10 000 mPa·s dans des conditions ambiantes ; et dans lequel (i) le produit alimentaire fluide (1) comprend des particules d'aliment (2) ayant une ou plusieurs dimensions sélectionnées dans la plage de 0,1*d2-0,5*d2, le canal de système (210) ayant un diamètre (d2) sélectionné dans la plage de 25-80 mm et/ou
(ii) le produit alimentaire fluide (1) comprend une soupe ou une sauce ou un aliment pour bébés, le produit alimentaire fluide comprenant des particules d'aliment solide.
